# EUROPEAN PATENT APPLICATION

(11) **EP 3 072 776 A2**
(43) Date of publication of application: **28.09.2016**
(21) Application number: 16167666.3
(22) Date of filing: 13.08.2009
(51) Int. Cl.: B62B 3/02, A47L 13/51, B62B 3/10, B62B 5/00, B62B 3/08

(54) **ADJUSTABLE CLEANING CART AND METHOD**

(30) Priority: 13.08.2008 US 88618 P
(62) Divisional of application: 09807312.5
(71) Applicant: Diversey, Inc., Sturtevant, WI 53177 (US)
(72) Inventor: Rouillard, Carol A., Loveland, OH 45150 (US); Bober, Andrew M., Racine, WI 53403 (US); Widmer, Alfred Adolf, 9500 Wil (SG) (CH); Russell, Andrew R.J., Boum, Cambridge CB3 7SH (GB); Clark, Dave, Welwyn Garden City, AL7 1EG (GB); McBrien, Roderick J., Leamington Spa, CV31 1TN (GB)
(74) Representative: Ruschke, Hans Edvard

(57) **Abstract**

A cleaning cart supports cleaning supplies and comprises a bar defining a length that is adjustable to change at least one of a length and a width of the cleaning cart, first and second wheels coupled to the bar and separated a distance that is adjustable by varying the length of the bar, an upright coupled to the bar and extending upwardly therefrom, and a receptacle coupled to at least one of the bar and the upright and adapted to hold cleaning supplies therein.

## Description

### RELATED APPLICATIONS

This application paragraphs the benefit of U.S. Provisional Patent Application No. 61/088,618, filed August 13, 2008.

### BACKGROUND

The present invention relates to carts adapted to hold a variety of cleaning and maintenance supplies and devices, and receptacles and fixtures for such supplies and devices.

Conventional cleaning carts in a wide variety of sizes and shapes exist, each adapted for one or more types of cleaning and maintenance. Typically, each cart is adapted for a particular working environment and application, making the cart poorly suited for other types of working environments and applications. For example, it is often necessary to use different sizes of conventional cleaning carts to aid in cleaning. This size selection can call for the need to use relatively large cleaning carts in the process of cleaning large building areas (e.g., common areas, large rooms, hallways, and the like), and smaller cleaning carts in the process of cleaning smaller building areas (e.g., some hotel rooms, bathrooms, and the like). As another example, different areas to be cleaned often require different arrangements of carts for different cleaning methods and/or cleaning products. It is inconvenient and expensive to purchase, own, transport, and store multiple sizes and arrangements of carts for cleaning different areas. Accordingly, advancements in cleaning and maintenance carts continue to be welcome in the art.

### SUMMARY

In some embodiments, a cleaning cart for supporting cleaning supplies is provided, and comprises a bar defining a length that is adjustable to change at least one of a length and a width of the cleaning cart; first and second wheels coupled to the bar and separated a distance that is adjustable by varying the length of the bar; an upright coupled to the bar and extending upwardly therefrom; and a receptacle coupled to at least one of the bar and the upright and adapted to hold cleaning supplies therein.

Some embodiments of the present invention provide a cleaning cart for supporting cleaning supplies, wherein the cleaning cart comprises a bar; first and second wheels coupled to the bar; an upright coupled to the bar, extending upwardly therefrom, at least partially defining a height of the cleaning cart, and having a length that is adjustable to change the height of the cleaning cart; and a receptacle coupled to at least one of the bar and the upright and adapted to hold cleaning supplies therein.

Some embodiments of the present invention provide a cleaning cart for supporting cleaning supplies that includes a cart frame, at least one receptacle movable with respect to the cart frame, a receptacle frame moveably coupled to the cart frame to support the at least one receptacle on the cart frame, wherein the receptacle is removable and replaceable within the receptacle frame. and a user-manipulable control coupled to the receptacle frame and operable to move the receptacle and receptacle frame between a stowed position and a deployed position with respect to the main frame.

Some embodiments of the present invention provide a cleaning cart for supporting cleaning supplies that includes a cart frame, at least one receptacle movable with respect to the cart frame, and at least one receptacle frame moveably coupled to the cart frame to support the at least one receptacle on the cart frame. The receptacle frame is movable in a combination of translation and rotation between a stowed position and a deployed position with respect to the main frame.

Some embodiments of the present invention provide a cleaning cart for supporting cleaning supplies, including a frame, at least one top receptacle supported on the frame and accessible from a top of the cleaning cart, at least one underlying receptacle supported on the frame and accessible from a side of the cleaning cart, and a barrier movable to and from a position in which removal of the at least one top receptacle and the at least one underlying receptacle is blocked.

Other aspects of the invention will become apparent by consideration of the detailed description and accompanying drawings.

### BRIEF DESCRIPTION OF THE DRAWINGS

Fig. 1 is a perspective view of a cleaning cart according to an embodiment of the present invention, wherein the cleaning cart has a frame in a first configuration.
Fig. 2 is a perspective view of the cleaning cart of Fig. 1, shown with the frame in a second configuration.
Fig. 3 is a perspective view of the cleaning cart of Figs. 1 and 2, shown with a number of fixtures thereon, including a support tray in a stowed position.
Fig. 4 is a perspective view of the cleaning cart of Fig. 3, shown with the support tray in a deployed position.
Fig. 5 is a perspective view of the cleaning cart of Figs. 3 and 4, shown in the second configuration and with a different support tray in a deployed position.
Fig. 6 is a perspective view of the cleaning cart of Fig. 5, shown with additional receptacles thereon.
Fig. 7 is a perspective view of the cleaning cart of Figs. 5 and 6, shown with a different arrangement of receptacles thereon.
Fig. 8 is a perspective view of a cleaning cart according to another embodiment of the present invention, wherein the cleaning cart has a frame in a first configuration.
Fig. 9 is a perspective view of the cleaning cart of Fig. 8, shown with the frame in a second configuration.
Fig. 10 is a perspective view of the cleaning cart of Figs. 8 and 9, shown with the frame in a third configuration.
Fig. 11 is a perspective view of the cleaning cart of Figs. 8-10, shown with the frame in a fourth configuration.
Fig. 12 is a perspective view of the cleaning cart of Figs. 8-11, shown with the frame in the fourth configuration and having a receptacle support thereon.
Fig. 13 is a perspective view of the cleaning cart of Figs. 8-12, shown in the fourth configuration with additional fixtures and cleaning equipment thereon.
Fig. 14 is a perspective view of a cleaning cart according to yet another embodiment of the present invention, wherein the cleaning cart has a frame in a first configuration.
Fig. 15 is a perspective view of the cleaning cart of Fig. 14, shown with additional fixtures and cleaning equipment thereon.
Fig. 16 is a perspective view the cleaning cart of Fig. 15, shown with an alternative arrangement of additional fixtures and cleaning equipment thereon.
Fig. 17 is a perspective view of the cleaning cart of Fig. 14, shown with a different arrangement of receptacles, fixtures, and cleaning equipment thereon.
Fig. 18 is a perspective view of the cleaning cart of Fig. 14, shown with another arrangement of receptacles, fixtures, and cleaning equipment thereon, and in a first frame configuration.
Fig. 19 is a perspective view of the cleaning cart of Fig. 14, shown with another arrangement of receptacles, fixtures, and cleaning equipment thereon, and in a second frame configuration.
Fig. 20 is a perspective view of the cleaning cart of Fig. 14, shown with yet another arrangement of receptacles, fixtures, and cleaning equipment thereon, and in the second frame configuration.
Fig. 21 is a bottom perspective view of a cleaning cart having an adjustable length.
Fig. 22 is a top perspective view of a cleaning cart having an adjustable length and an adjustable height.
Fig. 23 is a perspective view of a cleaning cart that has an adjustable height and that includes a laterally sliding shelf.
Fig. 24 is a perspective view of a cleaning cart that includes a laterally sliding shelf.
Figs. 25 and 26 are perspective views of a first embodiment of a receptacle holder that is rotatable about vertical axes in respective stowed and deployed positions.
Fig. 27 and 28 are perspective view of a second embodiment of a receptacle holder that is rotatable about vertical axis in respective stowed and deployed positions.
Fig. 29 is an elevational detail view of a cleaning cart having a user-manipulatable receptacle control according to an embodiment of the present invention.
Fig. 30 is an elevational detail view of a cleaning cart having a user-manipulatable receptacle control according to another embodiment of the present invention.
Fig. 31 is an elevational detail view of a cleaning cart having a user-manipulatable receptacle control according to an embodiment of the present invention.
Fig. 32 is an elevational detail view of a cleaning cart having a user-manipulatable receptacle control according to an embodiment of the present invention.
Fig. 33 is an elevational detail view of a cleaning cart having a user-manipulatable receptacle control according to an embodiment of the present invention.
Figs. 34 is an elevational detail view of a cleaning cart having a user-manipulatable receptacle control according to an embodiment of the present invention.
Fig. 35 is an elevational detail view of a cleaning cart having a user-manipulatable receptacle control according to an embodiment of the present invention.
Figs. 36-39 are perspective views of a cleaning cart according to another embodiment of the present invention, shown in different configurations.
Figs. 40-43 are perspective views of a cleaning cart according to another embodiment of the present invention, shown in different configurations.
Figs. 44 and 45 are perspective views of a cleaning cart according to another embodiment of the present invention, shown in different configurations.
Figs. 46 and 47 are elevational and top detail views of a cleaning cart with a locking apparatus according to an embodiment of the present invention.
Figs. 48-50 are perspective detail views of a cleaning cart with a locking apparatus according to another embodiment of the present invention.
Figs. 51-54 are perspective detail views of the locking apparatus of the cleaning cart illustrated in Figs. 48-50.

### DETAILED DESCRIPTION

Before any embodiments of the present invention are explained in detail, it is to be understood that the invention is not limited in its application to the details of construction and the arrangement of components set forth in the following description or illustrated in the accompanying drawings. The invention is capable of other embodiments and of being practiced or of being carried out in various ways. Also, it is to be understood that the phraseology and terminology used herein is for the purpose of description, and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

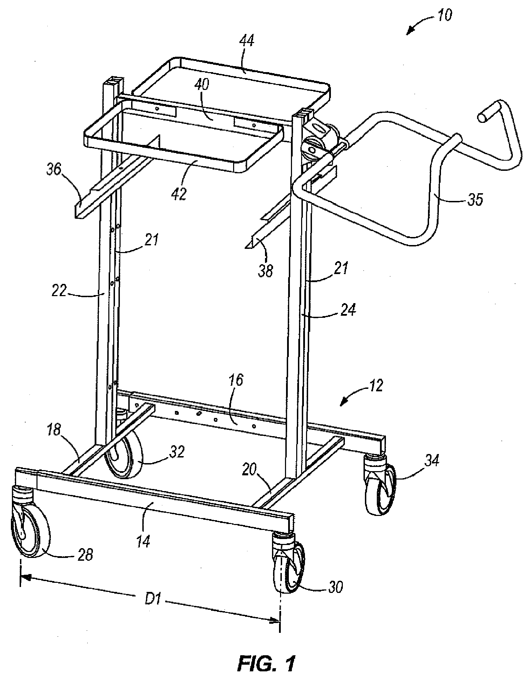

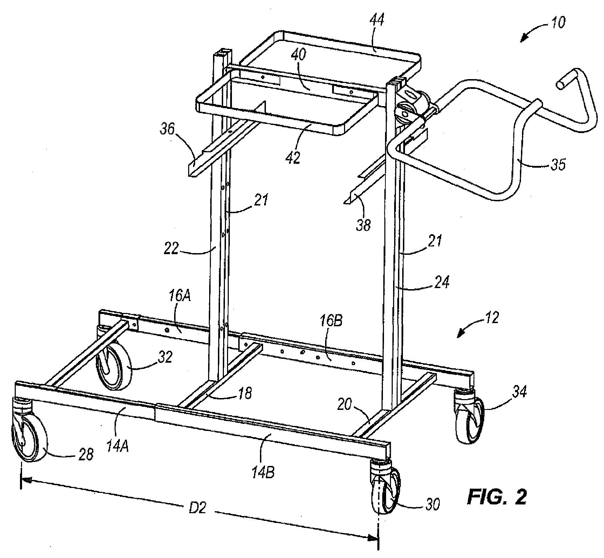

Figs. 1 and 2 illustrate a cleaning cart 10 having a frame 12 in a first configuration. The frame 12 comprises first and second bars 14, 16, first and second crossbars 18, 20 extending between and connecting the first and second bars 14, 16, and first and second uprights 22, 24 coupled to the respective first and second crossbars 18, 20. The first and second uprights 22, 24 extend substantially vertically upward from the first and second crossbars 18, 20. The first and second bars 14, 16 and the first and second crossbars 18, 20 are illustrated in a horizontal orientation. However, in other embodiments, the first and second bars 14, 16 and/or the first and second crossbars 18, 20 can be inclined to any desired extent while still performing the function of supporting the rest of the frame 12. Similarly, the first and second uprights 22, 24 are shown in a vertical orientation, but can instead be inclined in other embodiments while still performing their supportive function as described in greater detail below.

Although the first and second uprights 22, 24 extend from the first and second crossbars 18, 20, respectively, it will be appreciated that the first and second uprights 22, 24 can instead extend from the first and second bars 14, 16. Also, more or fewer than two uprights can be coupled to the bars 14, 16 and/or the crossbars 18, 20, and more or fewer than two crossbars 18, 20 can extend between the first and second bars 14, 16. In some embodiments, one or more crossbars 18, 20 can be removably attached to the first and second bars 14, 16, whereas in other embodiments, all of the crossbars 18, 20 are integral or permanently attached to the first and second bars 14, 16. For example, and with reference to Fig. 2, a third crossbar 46 can be removably mounted to the horizontal bars 14, 16 for additional support. Other embodiments include a crossbar 46 adjacent the second crossbar 20. In any case, such additional crossbars can be positioned anywhere desired along the lengths of the first and second bars 14, 16.

The first and second uprights 22, 24 are shown as extending from a location midway between the first and second bars 14, 16. However, in other embodiments, the first and/or second upright 22, 24 can be closer to either of the first and second bars 14, 16.

With continued reference to the illustrated embodiment of Figs. 1 and 2, first front and rear wheels 28, 30 are coupled to the first horizontal bar 14, and second front and rear wheels 32, 34 are coupled to the second horizontal bar 16 to support the frame 12 above a surface and for movement of the frame 12 across the surface. In other embodiments, either or both of the first and second front wheels 28, 32 can instead be coupled to the first crossbar 18, or either or both of the first and second rear wheels 30, 34 can instead be coupled to the second crossbar 20. The illustrated wheels 28, 30, 32, 34 are caster wheels, although any other type of wheel can instead be used for the front and/or rear wheels 28, 30, 32, 34. The first and second front wheels 28, 32 are each positioned a first distance D1 from the first and second rear wheels 30, 34, respectively.

The frame 12 in the illustrated embodiment of Fig. 1 has a first frame footprint defined by the area between the first front and rear wheels 28, 30 and the second front and rear wheels 32, 34, and includes the area between the first and second horizontal bars 14, 16.

The cleaning cart 10 illustrated in Figs. 1 and 2 includes a handle 35 graspable by an operator. In some embodiments (such as that shown in Figs. 1 and 2), the handle 35 is pivotable with respect to the frame 12. For example, the handle 35 can be pivoted upward into an operating position as shown in Figs. 1 and 2. Also with reference to the illustrated embodiment of Figs. 1 and 2, the handle 35 is pivotably coupled to the second upright 24. In other embodiments, the handle 35 can be coupled (e.g., pivotably coupled) to the first upright 22, to other structure supported by the first and/or second uprights 22, 24, or to other uprights of the frame 12.

The cleaning cart 10 can have one or more bars extending between and coupling the first and second uprights 22, 24 at any location(s) along the lengths of the first and second uprights 22, 24. For example, and with reference to Figs. 1 and 2, a bar 40 extends between and couples the first and second uprights 22, 24 at a location adjacent the tops of the uprights 22,24.

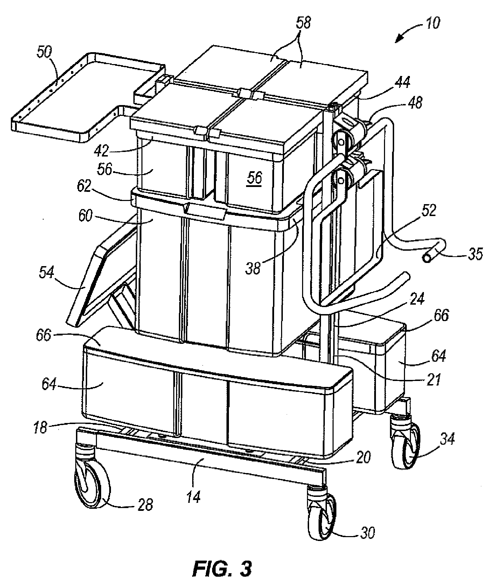

The cleaning cart 10 can be adapted to support any number of receptacles and cleaning tools or other cleaning equipment. To this end, the cleaning cart 10 can have one or more brackets 36, 38 for supporting cleaning receptacles upon the first and/or second uprights 22, 24, one or more frames 42, 44 for supporting receptacles or bags upon the first and/or second uprights 22, 24, and/or other brackets for supporting cleaning tools and other equipment upon the first and/or second uprights 22, 24. For example, the cleaning cart shown in Figs. 1 and 2 has first and second drawer runners or brackets 36, 38 coupled at a common height to the first and second uprights 22, 24, respectively. The first and second brackets 36, 38 can slidably receive and support one or more receptacles to be carried by the cart 10, such as drawers, shelves, bags, containers, and the like. Also, the cleaning cart shown in Figs. 1 and 2 has first and second receptacle frames 42, 44 coupled to the bar 40. The first and/or second receptacle frames 42, 44 can instead be coupled directly to the first and/or second uprights 22, 24, respectively. In either case, the first and second receptacle frames 42, 44 can be supported at any desired height along the first and second uprights 22, 24 (depending at least in part upon the vertical position of the bar 40 for embodiments in which the receptacle frames 42, 44 are attached thereto), and are shown at the tops of the first and second uprights 22, 24 in the illustrated embodiment of Figs. 1 and 2. The arrangement of the first and second brackets 36, 38 and the first and second receptacle frames 42, 44 will be discussed in more detail with respect to Figs. 3-7.

Fig. 2 shows the cleaning cart 10 with the frame 12 in a second configuration. In this configuration, the first and second bars 14, 16 are extended to expand the frame 12 (i.e., to provide the frame 12 with a longer length). In the illustrated embodiment, the first and second horizontal bars 14, 16 each include first and second portions (14A, 14B, 16A, 16B), such that first portions 14A, 16A of each bar 14, 16 are slidably received in the second portions 14B, 16B. By virtue of the fact that the first and second front wheels 28, 32 are connected to the first portions 14A, 16A, and the first and second rear wheels 30, 34 are connected to the second portions 14B, 16B, the first and second front wheels 28, 32 are positioned a second distance D2 from the first and second rear wheels 30, 34. The second distance D2 is greater than the first distance D1 shown in Fig. 1. Accordingly, the configuration of the frame 12 in Fig. 2 defines a second frame footprint larger than the first frame footprint described above in connection with Fig. 1.

The ability of the first and second bars 14, 16 to be expanded and contracted enables a user to adjust the size of the frame 12. In particular, the footprint of the cart 10 can be adjusted to meet the needs of the user, such as to adapt the cart 10 to support more or fewer receptacles and tools, to adapt the cart to fit into smaller areas, and to provide the cart 10 with greater stability based upon the positions of the front wheels 28, 32 with respect to the rear wheels 30, 34 (i.e., to increase the distance between the front and rear wheels 28, 32, 30, 34). In other embodiments, this feature is also or instead applied to the crossbars 18, 20 in order to enable a user to adjust the width of the cart 10. In this regard, it should be noted that the terms "front" and "rear" of the cart can be considered relative to the direction of travel of the cart in normal use, and in some embodiments is determined by the location of the handle 35 (e.g., in the embodiment of Figs. 1 and 2 and in other embodiments, the handle 35 is located at the rear of the cart 10).

The ability to expand or contract the frame 12 of the cart 10 as described above can be provided with the use of telescoping elements (bars 14, 16 in the illustrated embodiment of Figs. 1 and 2), where one element is at least partially received within another, and is movable to different positions with respect to and within the other to change the combined length of the first and second elements. For example, both bar portions 14A, 14B, 16A, 16B can have a closed cross-sectional tubular shape as shown in the illustrated embodiment of Figs. 1 and 2, the outer bar portion 14B, 16B can have a closed cross-sectional tubular shape within which is received a solid bar portion 14A, 16A, the outer bar portion 14B, 16B can have a C, V, J, I, or U-shaped cross-section within which is received an inner bar portion 14A, 16A having any cross-sectional shape, and the like.

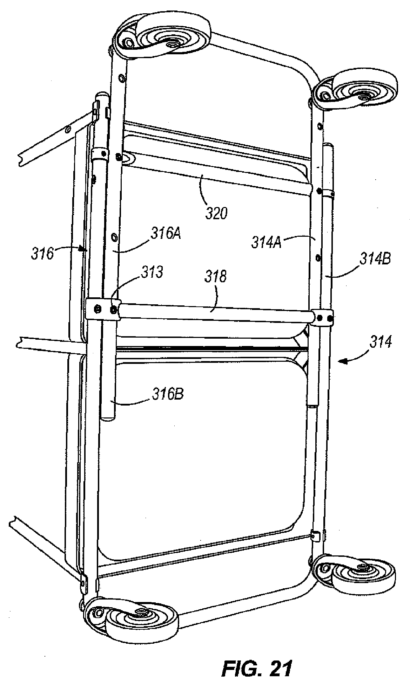

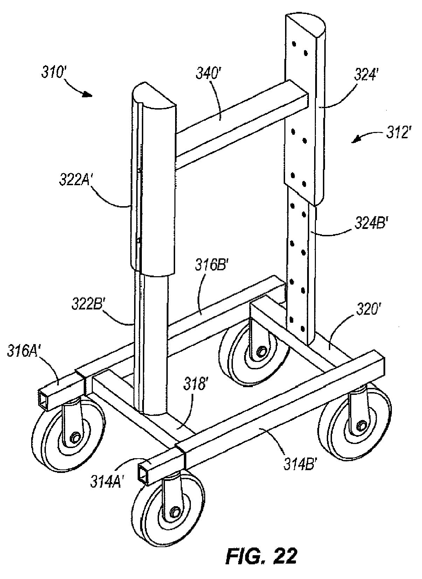

It should be noted that other elements performing the same length adjustment function without a telescoping feature are possible, and fall within the spirit and scope of the present invention. Figs. 21 and 22 illustrate examples of alternative frame structures in which beams (alternatives to beams 14, 16 of the illustrated embodiment of Figs. 1 and 2) adapted to be lengthened and shortened by a user are employed. Elements in Figs. 21 and 22 are provided with reference numerals in the 300 series corresponding to those in the embodiment of Figs. 1 and 2. The features and elements illustrated in Figs. 21 and 22 and described below can be utilized in any of the cleaning cart embodiments described and/or illustrated in the present application.

Figs. 21 and 22 illustrate one cleaning cart frame configuration in which the bars 314, 316 of the frame 312 have an adjustable length. The adjustable beam length structure illustrated in Figs. 21 and 22 can also or instead be used to adjust crossbars 318, 320 extending between the bars 314, 316 in order to change the width of the frame 312.

In those embodiments of the frame 12, 312 in which adjustable-length bars 314, 316 are used, alternatives to telescoping bar portions (described above) include bar portions 314A, 314B and 316A, 316B that can be fastened and/or clamped in two or more different positions with respect to one another to define different lengths of the bars 314, 316. For example, and with reference to Fig. 21, each bar 314, 316 of the illustrated frame 312 includes first and second portions 314A, 314B and 316A, 316B that are movable with respect to one another to extend and shorten the length of the bars 314, 316. In the illustrated embodiment of Fig. 21, the first and second bar portions 314A, 314B and 316A, 316B are coupled together to slide along one another in order to alter the length of the bars 314, 316 (and therefore, the frame 312). At two or more locations along the lengths of at least one of the bar portions 314A, 314B, 316A, 316B of each bar 314, 316, one or more fasteners 313 can be passed through corresponding apertures in the bar portions 314A, 314B and 316A, 316B to secure the bar portions 314A, 314B and 316A, 316B of each bar 314, 316 in place with respect to one another. The fasteners 313 can be passed through one or more crossbars 318, 320 as shown in Fig. 21, or can be passed through aligned apertures of bar portions 314A, 314B and 316A, 316B of each bar 314, 316. In other embodiments, one or more clamps (not shown) are used to secure the bar portions 314A, 314B in place with respect to one another in two of more positions of the first bar portions 314A, 316A with respect to the second bar portions 314B, 316B. Still other fasteners and fastening methods for securing one elongated element with respect to an adjacent elongated element are possible, and fall within the spirit and scope of the present invention.

In some embodiments, the bar portions 314A, 314B and 316A, 316B of each bar 314, 316 can be secured in place with respect to one another only in two or more discrete locations along the lengths of the bars 314, 316. However, in other embodiments, the bar portions 314A, 314B and 316A, 316B of each bar can be secured in place with respect to one another in an infinite number of locations along the lengths of the bars 314, 316 (depending at least in part upon the type of fasteners and fastening methods used.

Although the frame 312 can have any number of crossbars as described above, the frame 312 illustrated in Fig. 21 has two crossbars 318, 320, both of which support and retain the first and second bar portions 314A, 314B and 316A, 316B in a side-by-side relationship.

As described above, the bars 14, 16, 314, 316 of the frame 12, 312 can be adjusted to change the length and footprint of the frame 12, 312. This ability enables a user to adapt the same cart 10, 310 to different storage needs and different working environments. Similar versatility is provided by carts according to the present invention having a height that is adjustable. An example of such a cart is shown in Fig. 22.

The cart 310' illustrated in Fig. 22 has many of the same features and elements described and illustrated above with respect to the embodiments of Fig. 21. Accordingly, reference is hereby made to the embodiments described above with respect to Fig. 21 for further description of the embodiment of Fig. 22 (and alternatives thereto). Features and elements of the embodiment of Fig. 22 that correspond to those of Fig. 21 have corresponding reference numbers in the 300' series.

The cart 310' illustrated in Fig. 22 has a frame 312' with an adjustable length and height. The illustrated frame 312' can utilize the same telescoping bars 314', 316' as described above in connection with Figs. 1 and 2, or can instead utilize any of the other adjustable-length bars described herein. Crossbars 318' and 320' extend between and couple the bars 314B' and 316B' to provide support to the frame 312'. In some non-illustrated embodiments, crossbars 318' and 320' can be lengthened and shortened in any of the manners disclosed herein to alter the width of the frame 312'.

With continued reference to the illustrated embodiment of Fig. 22, the height of the frame can be adjusted by utilizing uprights 322', 324' each having two or more portions 322A', 322B' and 324A', 324B'. The portions 322A', 322B' and 324A', 324B' of each upright 322', 324' can each be adjusted to different lengths with respect to one another to change the lengths of the uprights 322', 324' in any of the manners described and/or illustrated herein with respect to the bars 14, 16, 314, 316. For example, the first upright portions 322A', 324A' of the uprights 322', 324' illustrated in Fig. 22 slidably receive the second upright portions 324A', 324A' in a telescoping manner (although in other embodiments, the second upright portions 322B', 324B' can instead slidably receive the first upright portions 322A', 324B' in a telescoping manner). The first and second upright portions 322A', 324A', 322B', 324B' can be retained in a desired position with respect to one another in a number of different manners, including without limitation pins, posts, screws, or other releasable fasteners passed through aligned apertures in the first and second upright portions 322A', 322B' and 324A', 324B' of each upright 322', 324', a protrusion on one of the first and second upright portions 322A', 324A' or 322B', 324B' releasably engagable within an aperture in the other of the first and second upright portions 322B', 324B' or 322A', 324A', respectively, one or more releasably clamps on the first and/or second upright portions 322A', 324A' or 322B', 324B', spring-loaded balls, levers, or pins on one of the first and second upright portions 322A', 324A' or 322B', 324B' releasably mating with detents, holes, grooves, recesses, or other apertures in the other of the first and second upright portions 322A', 324A', or 322B', 324B', respectively, and the like. Any of these manners of retaining one upright portion 322A', 322B' in place with respect to another upright portion 324A', 324B' can be utilized to retain any of the bars or adjustable frame elements of the various cart embodiments disclosed herein in any number of desired positions (and corresponding lengths).

With continued reference to the cart embodiment of Fig. 22, the frame cross member 340' is illustrated as having a fixed length, but in other embodiments can have a variable length using any of the variable-length structures described and/or illustrated herein. In this regard, any cross member extending between uprights according to any of the embodiments disclosed herein can have a fixed or variable length as desired.

Although adjustable length uprights 322', 324' can be used as described herein, in other embodiments the uprights 322', 324' can have multiple portions that are connected in end-to-end fashion (e.g., by mating ends of the portions) to enable a user to select a desired upright length by selecting the number of upright portions to use for a cart configuration.

With reference back to the cart embodiment shown in Figs. 1 and 2, Fig. 3 shows the cart 10 with the frame 12 in a retracted position and the handle 35 pivoted downward to a stowed position. The handle 35 can be locked into a deployed position by a locking mechanism, such as the illustrated cam lever 48. The handle 35 can be retained in the downward stowed position by gravity alone, or can be retained in such a position by a locking mechanism such as the illustrated cam lever 48.

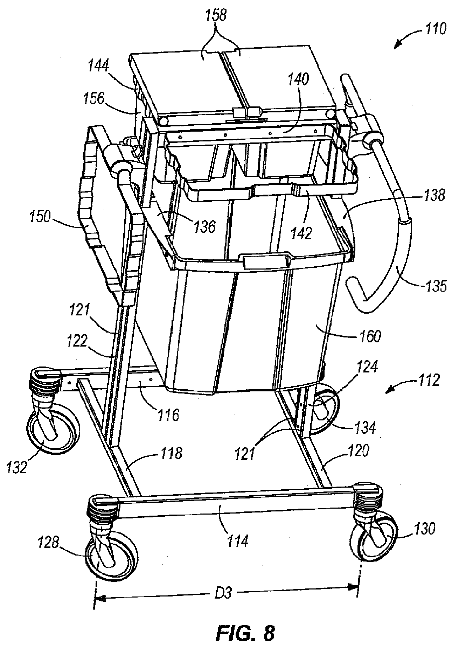

In the illustrated embodiment of Figs. 1 and 2, a number of elements can be mounted upon the first and/or second uprights 22, 24. For this purpose, the first and second uprights 22, 24 have apertures 21 within which protrusions of the elements can be received and retained. Any number of apertures 21 can be provided along the lengths of the first and/or second uprights 22, 24 for attachment of any number of elements at different heights along the first and/or second uprights 22, 24. The apertures 21 can have a number of different forms, including without limitation holes having round, oval, triangular, rectangular or irregular shapes along the uprights 22, 24. In other embodiments, the apertures 21 are defined at least in part by grooves extending along at least part of the lengths of the first and/or second uprights 22, 24. The use of apertures 21 in the form of grooves can enable a user to attach elements at any location along the grooves (e.g., in a range of positions between the ends of the grooves). The apertures 21 of the uprights 22, 24 can be located anywhere along the uprights 22, 24 where attachment of elements is desired. In some embodiments, two or more apertures can be used at given locations along the uprights 22, 24. For example, although a single aperture 21 in the form of a groove is located in each of the uprights 22, 24 illustrated in Figs. 1-3, two apertures 21 in the form of parallel grooves are located on the inboard sides of the uprights 22, 24 in the illustrated embodiment of Fig. 8 (for receiving a pair of projections from elements to be mounted on the uprights 22, 24).

Apertures 21 can be located on any face of the uprights 22, 24 where elements are to be attached to the uprights 22, 24. For example, elements can be attached to the forward and rear faces of both uprights 22, 24 in the embodiment of Figs. 1-3. In other embodiments, apertures can also or instead be defined in either or both lateral sides of the uprights 22, 24 for attachment of elements on either or both sides of the uprights 22, 24.

Although apertures in the uprights 22, 24 can be used for securing elements to the uprights 22, 24 as described above, it should be noted that the locations of protrusions on the elements and apertures on the uprights 22, 24 can be reversed in other embodiments. For example, pins, posts, hooks, or other protrusions at one or more locations along the uprights 22, 24 can releasably mate with apertures in elements to be mounted to the uprights 22, 24. As another example, a rib or other elongated protrusion running along part or all of the first and/or second upright 22, 24 can slidably mate with an aperture on an element to be mounted thereon, such as in a dovetail or tenon and mortise arrangement. Still other types of aperture and protrusions mating arrangement are possible, and fall within the spirit and scope of the present invention.

The use of mating apertures and protrusions to mount elements upon the first and/or second uprights can be applied to any of the cart embodiments described and/or illustrated herein. Many of such mounting arrangements permit a user to support receptacle frames, bag frames, handle brackets, and other fixtures at desired heights along the uprights 22, 24. Particularly in those embodiments in which multiple mounting locations are available (e.g., especially with groove and protrusion mounting arrangements as described above, where a continuous range of mounting locations exists along the uprights 22, 24), such versatility enables the user to adapt the cleaning cart 10 to a wide range of applications and working environments.

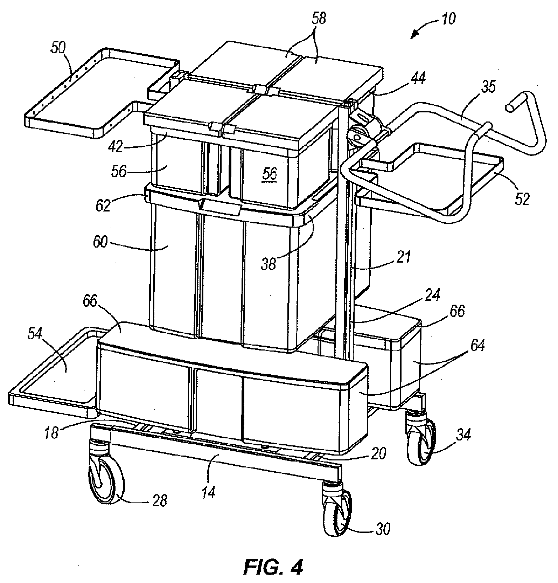

Figs. 3 and 4 illustrate components that can be coupled to the cart 10 shown in Figs. 1 and 2. One such component is a front bag frame 50 coupled to the first upright 22. The illustrated front bag frame 50 is fixedly coupled to the first upright 22. In some embodiments, the front bag frame 50 is coupled to the first upright 22 by a bracket (not visible in Figs. 3 and 4) slidably received within a groove 21 extending along the forward-facing surface of the first upright 22. The bracket used to mount the front bag frame 50 can be the same as that shown in Figs. 8-13, wherein a T-shaped portion of the bracket extends within the groove 21 and is slidable therealong to different desired positions along the upright 22. Such a bracket can be used to secure any element to an upright in any of the embodiments described and/or illustrated herein. In some embodiments, the front bag frame 50 can pivot upwards to a deployed position for holding a bag, such as a laundry bag or a garbage bag.

Another component is a rear bag frame 52 coupled to the second upright 24 shown in Figs. 3 and 4. The rear bag frame 52 can hold a bag, such as a laundry or a garbage bag. The rear bag frame 52 is shown in a lowered stowed position in Fig. 3, and in a raised deployed position in Fig. 4, and in some embodiments can be secured in position by a cam lever as described above in connection with the front bag frame 50. A front support tray 54 can be coupled to the first or second upright 24 by a bracket (e.g., the same or similar to the bracket described above for mounting the front bag frame 50) for pivoting between raised stowed and lowered deployed positions. The front support tray 54 is shown in the raised stowed position in Fig. 3, and in the lowered deployed position in Fig. 4.

With continued reference to Figs. 3 and 4, the cleaning cart 10 is shown with a plurality of receptacles supported thereon. First and second pairs of top receptacles 56 are supported on the first and second top receptacle frames 42, 44. The top receptacles 56 can each have a cover 58 for selectively covering a top of each top receptacle 56. In some embodiments, the top receptacles 56 are as wide as the top receptacle frames 42, 44, such that only first and second top receptacles 56 are included in each frame 42, 44. In other embodiments, any other number of top receptacle frames 42, 44 can each be shaped and sized to hold one, two, or more top receptacles 56. As illustrated in Figs. 3-6, an intermediate receptacle 60 is supported by brackets 36, 38 (described above). The intermediate receptacle 60 can also include a cover 62, as shown in Figs. 3-6. The brackets 36, 38 can slidably receive adjacent edges of the intermediate receptacle 60, so that the intermediate receptacle 60 can be slid into and out of place on the cart 10 without disturbing other receptacles or portions of the cart 10. The illustrated intermediate receptacle 60 is deeper than the top receptacles 56, and substantially occupies the same or similar footprint covered by both the first and second pairs of top receptacles 56. In other embodiments, other intermediate receptacles having different sizes can be supported by the brackets 36, 38 (or additional brackets 36, 38) located above or below the illustrated brackets 36, 38), such as two intermediate receptacles of the same, smaller, or larger depth as the illustrated intermediate receptacle 60, each of which are supported on a different pair of ends of each bracket 36, 38.

The illustrated embodiment of Figs. 3-6 further includes left and right lower receptacles 64. The left and right lower receptacles 64 can include respective left and right covers 66. The illustrated lower receptacles 64 have an elongated shape, and extend along the length of the frame 12. The lower receptacles 64 can be supported by the horizontal bars 14, 16 and/or the crossbars 18, 20, or can be supported in any of the manners described in greater detail below. In some embodiments, a plate is positioned over the horizontal bars 14, 16 and/or the crossbars 18, 20 to support the lower receptacles 64. In other embodiments, any other number of lower receptacles having different sizes can be supported upon the cart 10.

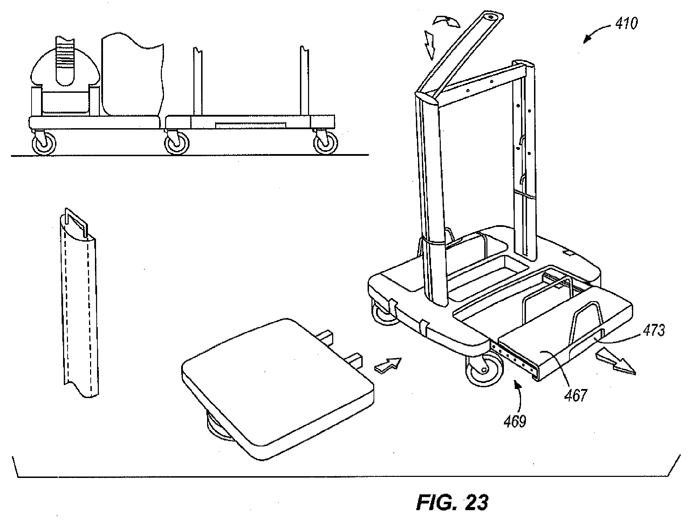

In some embodiments, lower receptacles 64 supported by the cart 10 can be moved with respect to the cart 10 in order to provide increased user access to the interior areas of the lower receptacles 64, and to enable a user to stow the lower receptacles 64 (and the contents therein) when not in use. The lower receptacles 64 illustrated in Figs. 3-6 can simply be moved and removed from their positions on the cart 10. Other cart embodiments in which lower receptacle movement (and in some cases, removal) are illustrated in Figs. 23-35. The lower receptacle support structures illustrated in Figs. 23-35 and described below (and any alternatives thereto) can be utilized in conjunction with any of the embodiments disclosed herein. Elements and features in Figs. 23-35 that correspond to elements and features of other embodiments described and/or illustrated herein are labeled in the 400 series of reference numbers.

In some embodiments, it can be desirable to laterally move and/or lower receptacles 464 with respect to their respective covers 466 without moving the covers 466. This capability can permit closer and more efficient packing of the various receptacles on the cart 410.

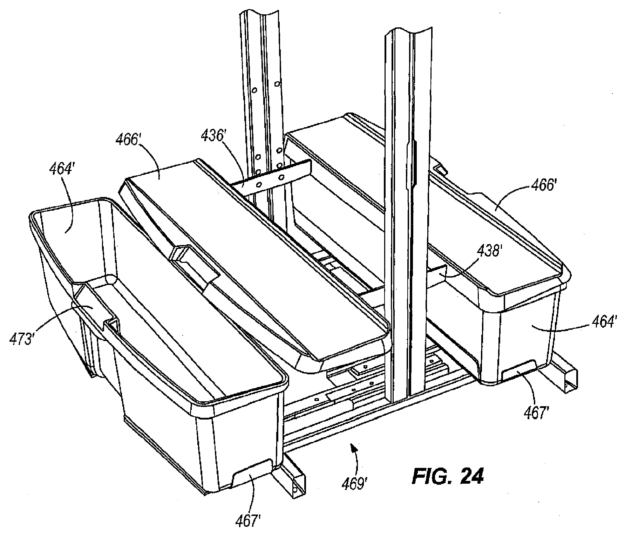

Two cart embodiments that permit movement of lower receptacles 464 with respect to respective covers 466 are shown in Figs. 23 and 24. However, it should be noted that these embodiments can be used to move lower receptacles 464 with their respective covers, as well. The embodiments illustrated in Figs. 23 and 24 permit the lower receptacles 464, 464' to slide horizontally inward and outward with respect to the cart 410, 410' along a substantially linear path. A lower receptacle support 467, 467' can be provided, such as a plate, shelf, frame, or other support member. In some embodiments, the lower receptacle support 467, 467' can be integral with or defined by a portion of the lower receptacle(s). The lower receptacle support 467, 467' can be coupled to the cart 410, 410' by a sliding assembly (indicated by reference numerals 469 in Fig. 23 and 469' in Fig. 24). By way of example only, the sliding assembly 469, 469' can be any type of bearing or bearingless drawer glide mounted beneath or beside the lower receptacle support 467, 467'. The lower receptacles 464 or the lower receptacle supports 467 can include one or more user manipulable controls or features, such as foot recess 473 illustrated in Fig. 23 enabling a user to pull out the lower receptacles 464 with the user's foot. In the various cart embodiments described and/or illustrated herein, the user can pull out or push back on the lower receptacle 464 or the lower receptacle support 467 to move the lower receptacle 464 and the lower receptacle support 467 with respect to the cart 410.

In some embodiments, such as that illustrated in Fig. 24, covers 466' of the lower receptacles 464' are coupled to the first and second uprights 422, 424 by first and second brackets 436', 438' to allow access into the lower receptacles 464' when the lower receptacles 464' are moved to an outward position. In other non-illustrated embodiments, the covers 466' remain coupled to the lower receptacles 464'. In such embodiments, as the lower receptacles 464' are moved outward with respect to the cart 410', vertical space can be provided to permit removal of the covers 466'. A user-manipulable control or feature, such as hand grip 473' illustrated in Fig. 24, can be used to facilitate a user in moving the lower receptacle 464' and the lower receptacle support 467' with respect to the cart 410'.

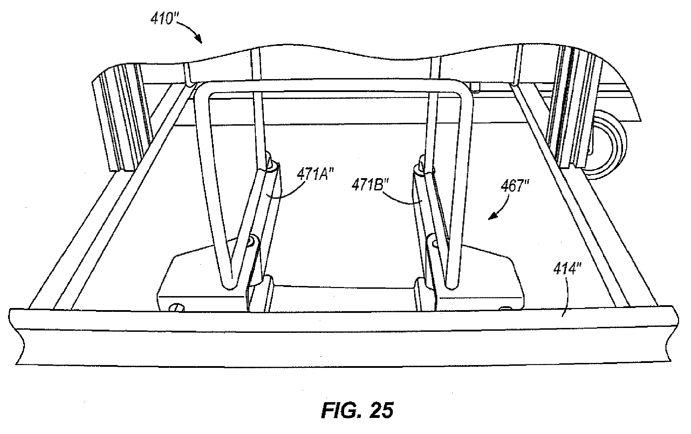

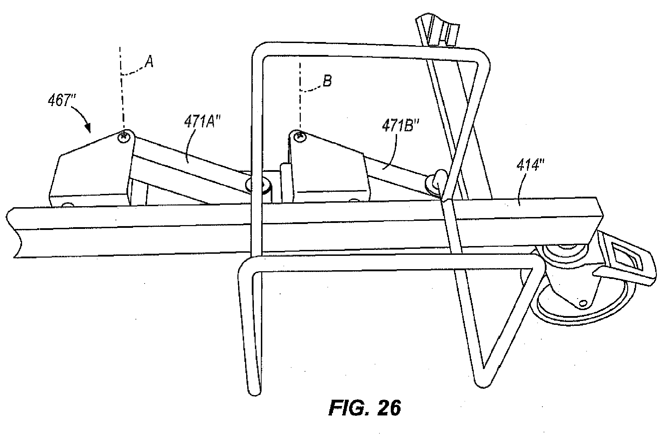

In some embodiments, one or more lower receptacles 464" are movable with respect to the cart 410" in a pivoting manner in order to provide increased access to the contents of the lower receptacles 464" and to stow the lower receptacles 464". For example, in some embodiments, the lower receptacle support 467" rotates about one or more vertical axes to move the lower receptacles 464" horizontally outward (e.g., along a circular path). One such receptacle support is shown in Figs. 25 and 26, where the lower receptacle support 467" includes two support bars 471A", 471B" coupled to the cart 410" for rotation about vertical axes. The support bars 471A", 471B" can be part of a four-bar linkage that permits the lower receptacle 464" thereon to move toward and away from the cart 410. Fig. 25 illustrates the lower receptacle 464" in an inward position, and Fig. 26 illustrates the lower receptacle 464" rotated clockwise to an outward position (such that the two support bars 471A", 471B" abut the first bar 414). The two vertical axes A, B in this embodiment can be defined by the two support bars 471A", 471B". In other embodiments, only a single support bar 471A", 471B" is used to rotate a lower receptacle 464" to and from a stowed position. In this regard, it should be noted that the pivoting support bars 471A", 471B" of the various embodiments described herein can take any shape and form capable of pivoting the lower receptacle 464" to and from a stowed position as described above, and need not necessarily have an elongated shape as shown in Figs. 25 and 26.

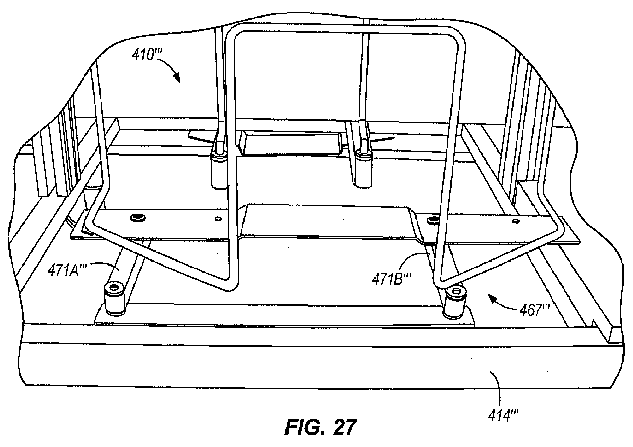

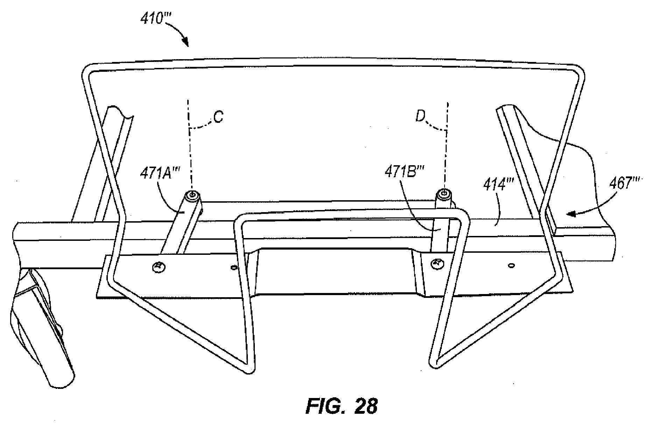

Another embodiment in which a lower receptacle support 467"' rotates about one or more vertical axes to move a lower receptacle 464'" horizontally outward is illustrated in Figs. 27 and 28. Fig. 27 illustrates the lower receptacle support 467'" in a first, inward position. The illustrated lower receptacle support 467" includes two support bars 471A"' 471B'" rotatably coupled to the cart 410'" about two vertical axes C, D. Fig. 28 illustrates the lower receptacle support 467'" rotated about axes C, D to an outward position. In contrast to the embodiment of Figs. 25 and 26, the two support bars 471A"', 471B'" can rotate freely about respective axes C, D without interference with the first horizontal bar 414"'.

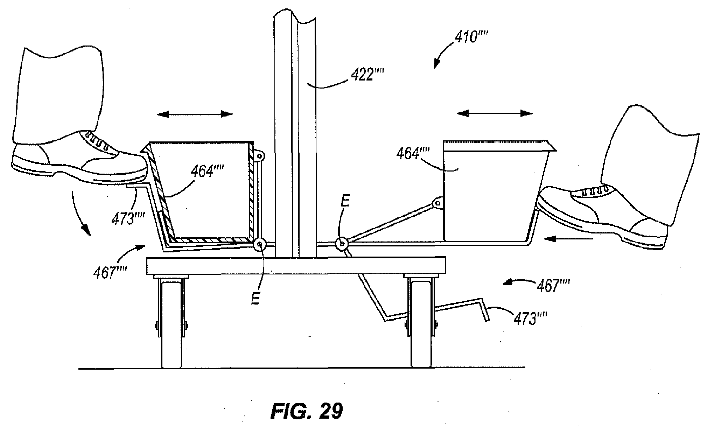

In other embodiments, one or more lower receptacles 464"" of the cleaning cart 410"" are rotatable about one or more non-vertical axes in order to permit the lower receptacle(s) 464"" to tip and/or to change in elevation as the lower receptacle(s) 464"" are moved to and from a stowed position on the cart 410"". One example of such an embodiment is shown in Fig. 29, where a lower receptacle support 467"" is rotatable about a horizontal axis E. When the lower receptacle support 467"" is rotated about the horizontal axis E (denoted by point E in Fig. 29), the lower receptacle 464"" moves toward and away from the uprights 422" ", 424"". The lower receptacle support 467"'' can include a user-manipulable control or feature, such as foot pedal 473"", that in some embodiments can be actuated by a foot to slide the lower receptacles 464"" toward and away from the uprights 422"", 424"".

Any of the above-described cart embodiments can lower the lower receptacles 464 as the lower receptacles move away from the cart 410. Also, in some embodiments, the lower receptacles 464 can pivot downward or move downward to permit better access to the interior of the lower receptacles 464. In any of these cases, such movement of the lower receptacles 464 can permit the lower receptacles to move toward and away from stationary lower receptacle covers carried by the cart 410, which in some cases can provide an improved seal between such covers and the lower receptacles.

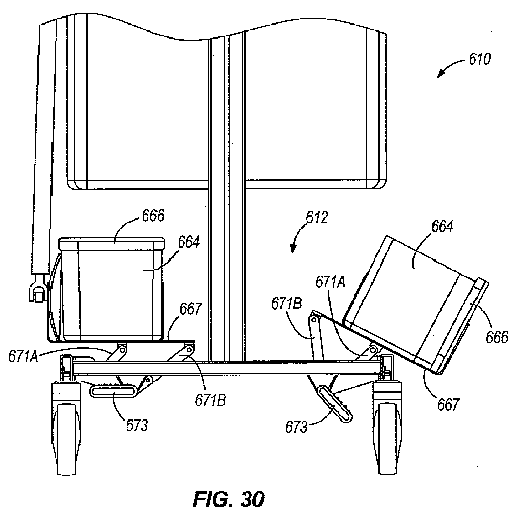

Another embodiment of a cleaning cart 610 according to the present invention includes two lower receptacles 664 that are supported on respective receptacle supports 667, as shown in Fig. 30. The lower receptacles 664 and the receptacle supports 667 both translate and pivot with respect to the cleaning cart 610. With reference to Fig. 30, for example, the lower receptacles 644 each pivot from a substantially upright position (see the left lower receptacle 644 of Fig. 30) to a tipped position (see the right lower receptacle 644 of Fig. 30) while also translating away from the center of the cleaning cart 610. This stands in contrast to lower receptacles that simply rotate in place about an axis fixed with respect to the cleaning cart 610.

With continued reference to Fig. 30, the illustrated cleaning cart 610 includes a linkage including two support bars 671A, 671B positioned between each of the receptacle supports 667 and the cart 610. In some embodiments, a single linkage having two support bars 671A, 671B is positioned between each of the receptacle supports 667 and the cart 610, whereas in other embodiments, two or more such linkages are positioned between each of the receptacle supports 667 and the cart 610 (e.g., one such linkage at each end of each lower receptacle 664). The support bars 671A and 671B together with a cart frame 612 and the respective receptacle supports 667 can act as a four-bar linkage to permit the lower receptacle 664 and the respective receptacle supports 667 to both translate along a generally horizontal plane and rotate about a substantially horizontal axis. The support bars 671A, 671B illustrated in Fig. 30 have different lengths to generate the pivoting motion of the lower receptacles 664. The respective lengths of the support bars 671A, 671B can be different to generate a greater or lesser amount of lower receptacle pivoting based upon the same translational movement of the lower receptacle 664.

In some embodiments (such as in the illustrated embodiment of Fig. 30), the receptacle supports 667 are slightly larger than the lower receptacles 664 to permit a mop or a receptacle cover 666 to be positioned adjacent the lower receptacle 664 and supported on the receptacle support 667.

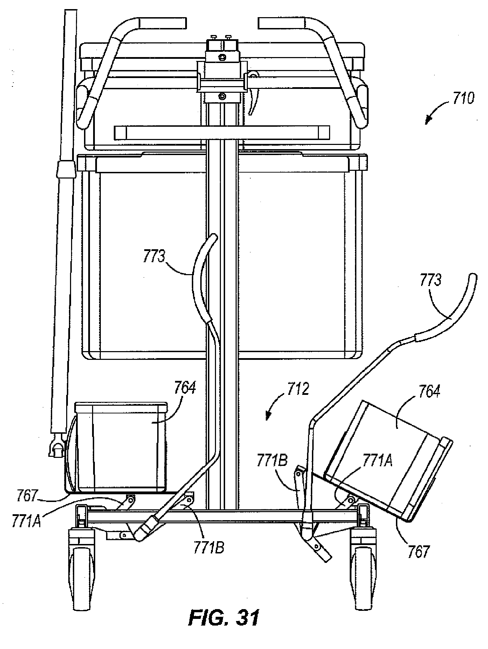

One or more user-manipulable controls or features can be included to permit a user to move the lower receptacles 664 and the supports 667 with respect to the cart 610. In the illustrated embodiment of Fig. 30, two foot pedals 673 are coupled to the receptacle supports 667 to move the receptacle supports 667 and the lower receptacles 664 with respect to the cart 610. The illustrated foot pedals 673 are positioned on one side of the lower receptacles 664, but in other embodiments, can be positioned in other locations. Each foot pedal 673 illustrated in Fig. 30 is pivotable about a shaft (not visible in Fig. 30) secured to an inboard end of a respective support bar 671B such that rotation of the foot pedal 673 by a user's foot causes the shaft to rotate about its axis and to thereby cause the support bar 671B to rotate with the shaft. This movement causes the receptacle support 667 and the other support bar 671A (one end of which is pivotably secured to the cart frame 612) to move in the manner described above. Other user-manipulable controls or features that are actuatable to translate and rotate the lower receptacles 664 and respective supports 667 about a cart frame 612 are illustrated in Figs. 31-34.

The cleaning cart embodiment illustrated in Fig. 31 is similar to that of Fig. 30, but instead includes a handle 773 as the user-manipulable control, such that a user can move lower receptacles 764 and respective receptacle supports 767 with respect to a cart 710 by hand. The illustrated embodiment in Fig. 31 also includes at least one linkage for each lower receptacle 764. Each linkage has two support bars 771A, 771B that cooperate with a frame 712 and the receptacle support 767 to define a four-bar linkage permitting rotation and translation of the receptacle 764 about the cart 710.

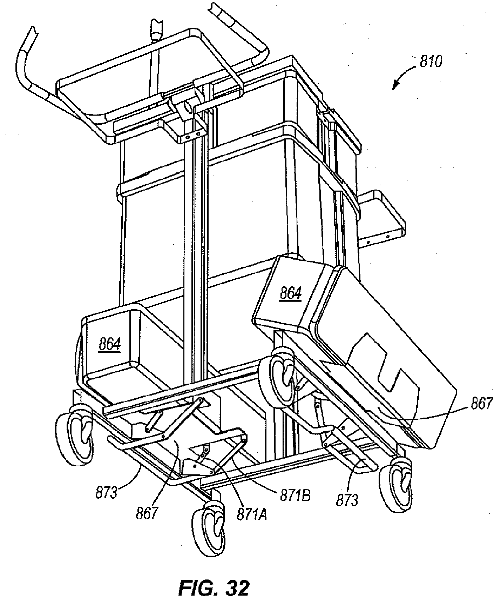

The cleaning cart embodiment illustrated in Fig. 32 includes a foot-operated pedal 873 as the user-manipulable control on cart 810. The foot-operated pedal 873 is shown centrally located with respect to lower receptacles 864 and receptacle supports 867, although the foot-operated pedal 873 can instead by located anywhere along the length of the cart 810. The illustrated embodiment in Fig. 32 also includes a linkage having two support bars 871A, 871B that work together in the same manner as the cart embodiments illustrated in Figs. 30 and 31. However, rather than being coupled to the support bars 871A, 871B by respective shafts as described above, the foot-operated pedals 873 are connected directly to the support bars 871B.

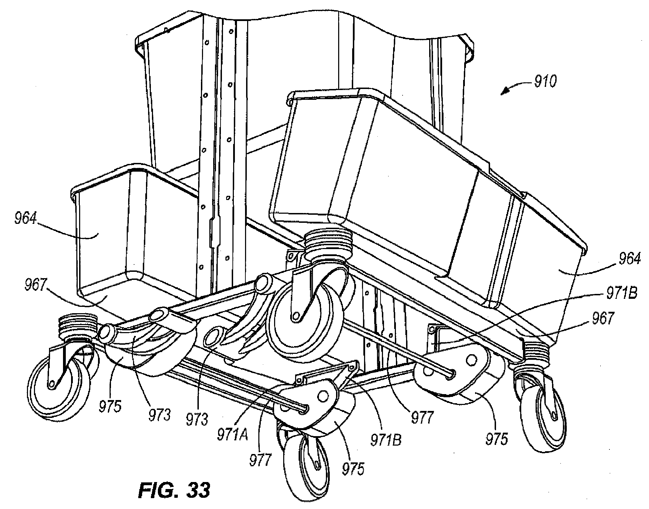

The cleaning cart embodiment illustrated in Fig. 33 includes two foot pedals 973 as the user-manipulable lower receptacle controls on the cleaning cart 910. The foot pedals 973 are located on one side of lower receptacles 964 and receptacle supports 967, although either or both foot pedals 973 can be located on an opposite side of the lower receptacles 964 and receptacle supports 967, or foot pedals 973 can be located on both sides of the lower receptacles 964 and receptacle supports 967. The illustrated foot pedals 973 are positioned to rotate in a general direction away from the cart 910. However, in other embodiments, the position and direction of rotation of the foot pedals 973 can be different to accomplish the same result.

With continued reference to the illustrated embodiment in Fig. 33, two gear boxes 975 are coupled to each respective foot pedal 973, and are operable to control the position of the lower receptacles 964 and the receptacle supports 967 with respect to the cart 910. A shaft 977 extends between the gear boxes 975, such that the lower receptacles 964 are supported on both ends to prevent or inhibit the ability of torque to twist or turn the lower receptacles 964 or supports 967. In other embodiments, only one gear box 975 is associated with each foot pedal 973, in which case the shaft 977 can be rotatably supported at either or both ends or at any intermediate location by a bearing or in any other suitable manner.

The illustrated embodiment in Fig. 33 includes linkages each having two support bars 971A, 971B that support the lower receptacles 964 and the receptacle supports 967 for rotation and translation about the cart 910. The support bars 971A, 971B can each pivot about a pivot (not shown) located within an associated gear box 975, which includes a gear (not shown) on the shaft 977 meshing with another gear on each such pivot to transmit rotational power from the shaft 977 to the support bars 971A, 971B.

In some embodiments, the gear boxes 975 and the shaft 977 can permit a user to lock or hold the lower receptacles 964 and respective supports 967 at any position along a travel path. It should also be noted that any number of the gear boxes 975 illustrated in Fig. 33 and described herein can be used in conjunction with any of the embodiments described above in connection with Figs. 30-32.

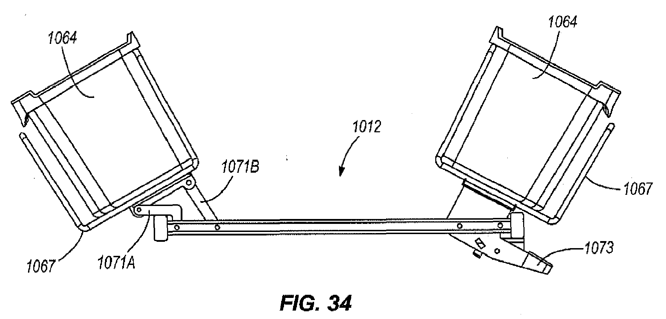

Another configuration of a user-manipulable control for movement of lower receptacles in a mobile cleaning cart is illustrated in Fig. 34, and provides an example of how any of the different linkages described and/or illustrated herein can be used in any combination to move different lower receptacles 1064 on the same cart. The illustrated cleaning cart in Fig. 34 includes a foot pedal 1073 to control movement of one of the lower receptacles 1064 supported by a receptacle support 1067, and also includes a linkage having two support bars 1071A, 1071B (similar to those described above) for translating and pivoting the other lower receptacle 1064 and respective support 1067 with respect to the frame 1012.

Figs. 30-34 illustrate various constructions that permit "over-center" rotation of lower receptacles (and their respective supports) with respect to cleaning carts. More particularly, in each of these embodiments, at least one receptacle can be moved between a stowed position and a deployed position, wherein the stowed and deployed positions are separated by at least one "over-center position". Once on either the deployed or stowed side of the over-center position, the receptacle is urged toward and/or retained in the deployed or stowed position by virtue of gravity and/or by the linkages used to generate movement of the receptacle.

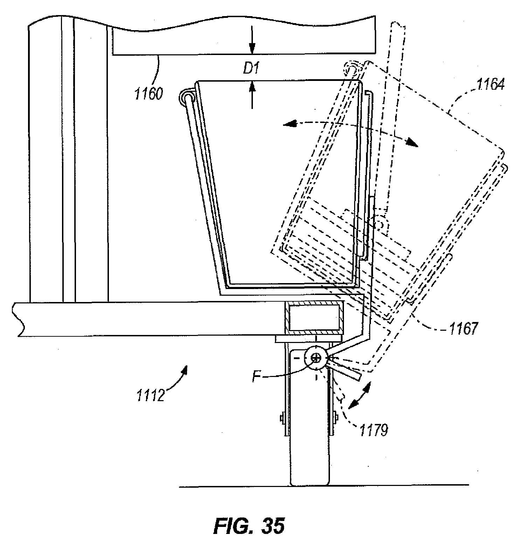

Fig. 35 illustrates another mobile cleaning cart embodiment in which a lower receptacle 1164 is moveable through an over-center position. However, it is noted that the lower receptacle 1164 illustrated in Fig. 35 does not translate, and instead only pivots about an axis F fixed with respect to the cleaning cart frame 1112. A lower receptacle 1164 and a receptacle support 1167 are illustrated as being supported on the frame 1112. The lower receptacle 1164 and support 1167 rotate about a point (at axis F) to move between stowed and deployed positions. In embodiments that do not include translation, a distance D1 can be established between the lower receptacle 1164 and an adjacent receptacle 1160 to permit rotation of the lower receptacle 1164. Also, a stop 1179 can be included to stop the lower receptacle 1164 from rotating past a deployed position, thereby inhibiting or preventing spillage of any contents from the lower receptacle 1164. In embodiments where space is more limited, movement that includes both translation and rotation can be utilized as described above.

The embodiments shown in Figs. 23-35 are included to illustrate some of the many possible arrangements and configurations that can permit lower receptacles of the cart to move to and from stowed positions on the cart. As is well understood by one of ordinary skill in the art, these embodiments are shown by way of example only, and are not intended to limit the scope of the invention to the structures shown and described herein.

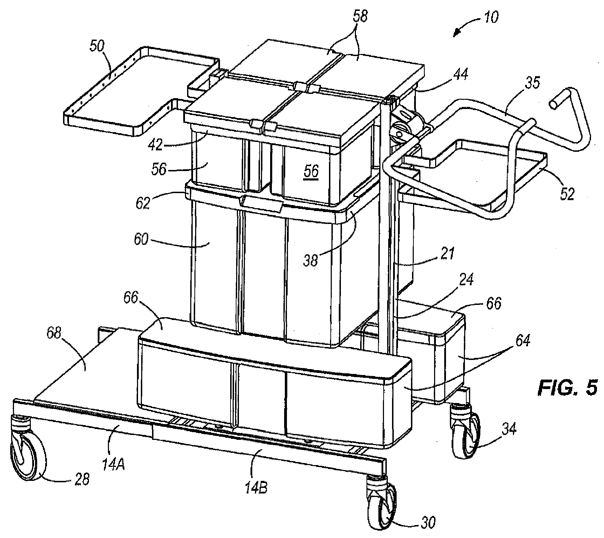

With reference again to the illustrated embodiment of Figs. 1 and 2, additional configurations of the illustrated cart 10 are shown in Figs. 5-7. In such configurations, the front support tray 54 of Figs. 3 and 4 are removed, and a front support plate 68 is installed. The front support plate 68 can be coupled to the first and/or second horizontal bars 14, 16 and/or one or more of the second and third crossbars 20, 46. In some embodiments, the front support plate 68 includes flanges that rest on one or more of the first and second horizontal bars 14, 16 and the second and third crossbars 20, 46. Also in some embodiments, a central portion of the front support plate 68 can extend downward between the bars 14, 16 and crossbars 20, 46 to better retain the front support plate 68 on the frame 12. In other embodiments, the front support plate can be coupled to the frame 12 in any other suitable manner, such as by one or more fasteners.

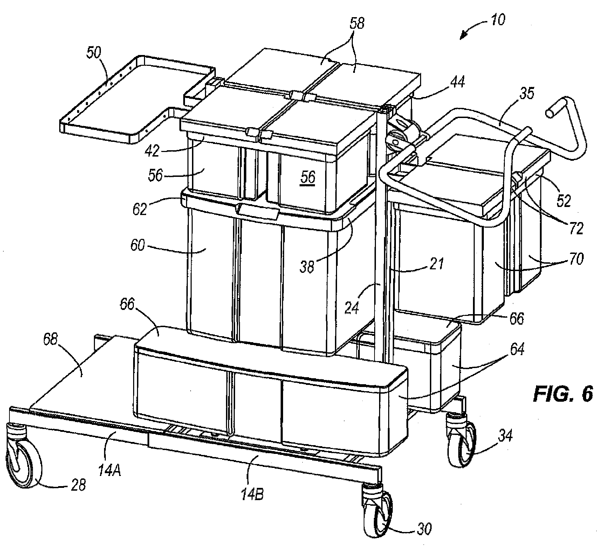

Fig. 6 illustrates the cart 10 configured as shown in Fig. 5, but also with two rear receptacles 70 supported on the rear frame 52. As with the other bag and receptacle frames described and/or illustrated herein, the bag and receptacle frames can be shaped and sized to hold any number and size of receptacles or bags. The illustrated rear receptacles 70 in Fig. 6 include covers 72 that are rotatably or removably coupled to the rear receptacles 70.

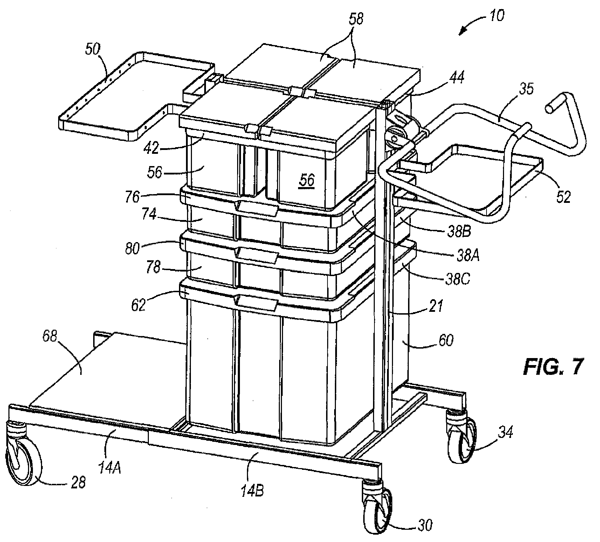

Fig. 7 illustrates the cart 10 of Figs. 1 and 2 with an alternate arrangement of receptacles. As with the arrangements illustrated in Figs. 3-6, top receptacles 56 are supported in first and second top receptacle frames 42, 44 and each are provided with a cover 58. A deeper lower receptacle 60 is positioned adjacent the first and second horizontal bars 14, 16, and is supported by brackets 36C and 38C having the same form and performing the same function as the brackets 36, 38 described above. The illustrated embodiment of Fig. 7 also includes first and second intermediate receptacles 74, 78 each having a respective cover 76, 80, and each supported by brackets 36A, 38A and 36B, 38B on the first and second uprights 22, 24 and located below the top receptacles 56.

The particular configurations of receptacles, brackets, and other fixtures shown in Figs. 1-7 are only provided to illustrate the manner in which the cart 10 can be easily configured to a user's needs and desired applications. For example, it will be appreciated that other quantities, sizes and arrangements of receptacles are possible and within the spirit and scope of the present invention. According to some embodiments of the present invention, the receptacles and other accessories can be coupled to the cart in many different positions along the height of the uprights, the length of the horizontal bars, and the width of the crossbars to provide a large number of different cart arrangements.

Figs. 8-13 illustrate another embodiment of a cart 110 according to the present invention. The embodiment of the cart 110 illustrated in Figs. 8-13 employs much of the same structure and has many of the same properties as the embodiments of the carts described above in connection with Figs. 1-7 and 21-35. Accordingly, the following description focuses primarily upon structure and features that are different than the embodiments described above in connection with Figs. 1-7 and 21-35. Reference should be made to the description above in connection with Figs. 1-7 and 21-35 for additional information regarding the structure and features, and possible alternatives to the structure and features of the cart 110 illustrated in Figs. 8-13 and described below. Features and elements in the embodiment of Figs. 8-13 corresponding to features and elements in the embodiments described above in connection with of Figs. 1-7 are numbered in the 100 series of reference numbers.

Fig. 8 illustrates a cart 110 including first and second horizontal bars 114, 116 and first and second crossbars 118, 120 supported on wheels 128, 130, 132, 134. The front and rear wheels 128, 132 and 130, 134 are spaced apart a third distance D3 so that an area between the wheels 128, 130, 132, 134 defines a footprint as described above in connection with the cart 10 of Figs. 1-7. The cart 110 of Fig. 8 further includes brackets 136 and 138 that support an intermediate receptacle 160. A cross member 140 is coupled between the first and second uprights 122, 124 at a top of the uprights 122, 124, and supports first and second top receptacle frames 142, 144. Two top receptacles 156 are supported in the first top receptacle frame 142, with the second top receptacle frame 144 shown empty. A handle 135 and front bag frame 150 are shown pivoted downward into respective stowed positions.

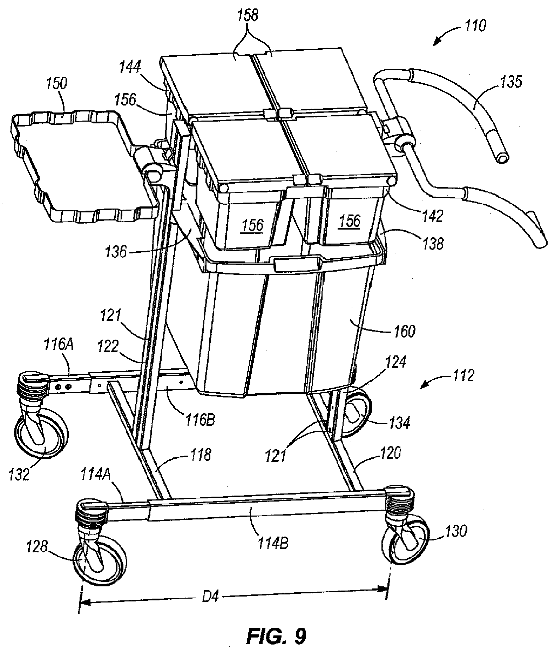

Figs. 9-12 show the cart 110 with the handle 135 and the front bag frame 150 in deployed positions. The handle 135 and the front bag frame 150 can be locked into place in their operating positions, and can be locked into place in their stowed position, as discussed above with respect to the cart 10 of Figs. 1-7. Figs. 9-12 also illustrate the use of four top receptacles 156 including covers 158.

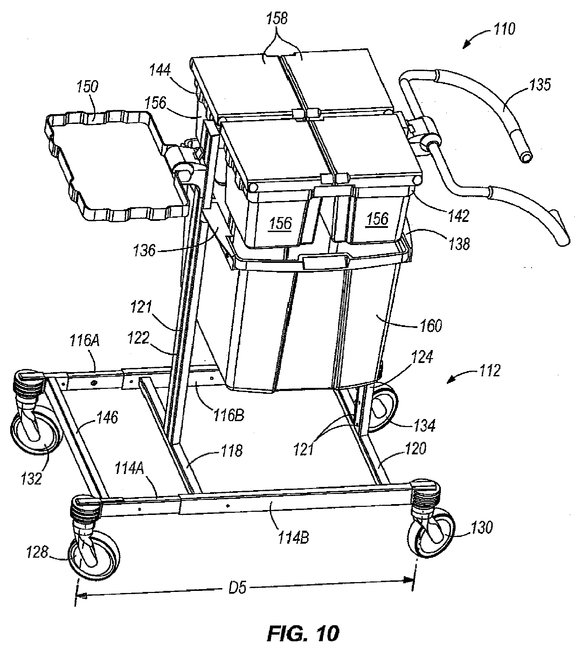

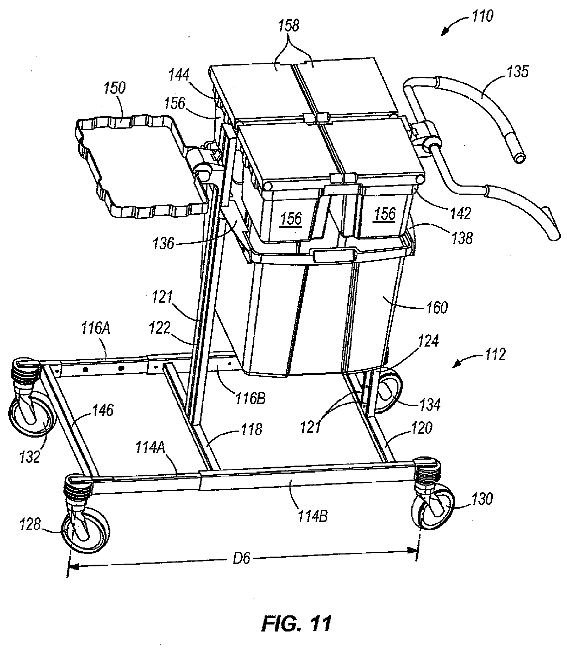

With continued reference to the embodiment of Figs. 9-12, the first bar portions 114A and 116A are shown adjusted to different positions with respect to the second bar portions 114B, 116B in Figs. 9-11, thereby providing different lengths of the first and second bars 114, 116. The distance between the front and rear wheels 128, 132 and 130, 134 is also varied through Figs. 9-12. In particular, the front and rear wheels 128, 132 and 130, 134 are spaced from each other a fourth distance D4 in Fig. 9 greater than the third distance D3 in Fig. 8. Accordingly, the frame footprint of Fig. 9 is greater than the frame footprint of Fig. 8. The front and rear wheels 128, 132 and 130, 134 are spaced apart a fifth distance D5 in Fig. 10 greater than the fourth distance D4 in Fig. 9. Accordingly, the frame footprint of Fig. 10 is greater than the frame footprint of Fig. 9. The front and rear wheels 128, 132 and 130, 134 are spaced apart a sixth distance D6 in Fig. 11 greater than the fifth distance F5 of Fig. 10. Accordingly, the frame footprint of Fig. 11 is greater than the frame footprint of Fig. 10. Also, the cart configuration illustrated in Figs. 10 and 11 includes the third crossbar 146 for additional support.

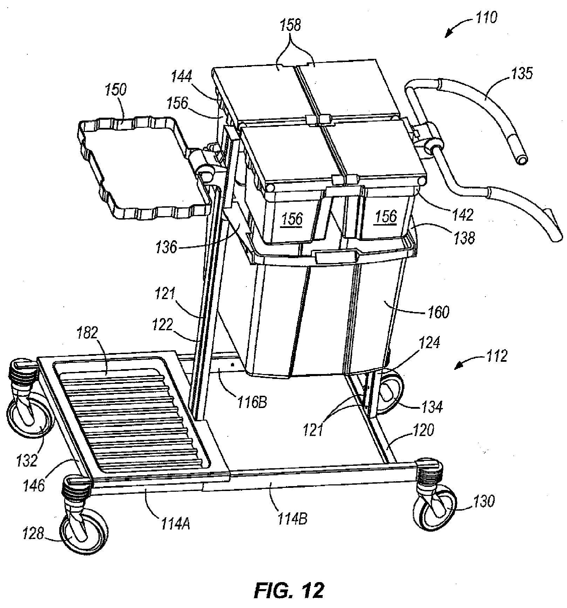

With reference now to Fig. 12, the cart 110 can be configured to have a front support tray 182 supported upon any one or more of the first and second horizontal bars 114, 116 and the second or third crossbars 120, 146. The tray 182 illustrated in Fig. 12 can be a ribbed tray as shown, or can be any other type of support for any of a variety of cleaning supplies and tools, such as a garbage receptacle, vacuum cleaner, mop bucket, and the like.

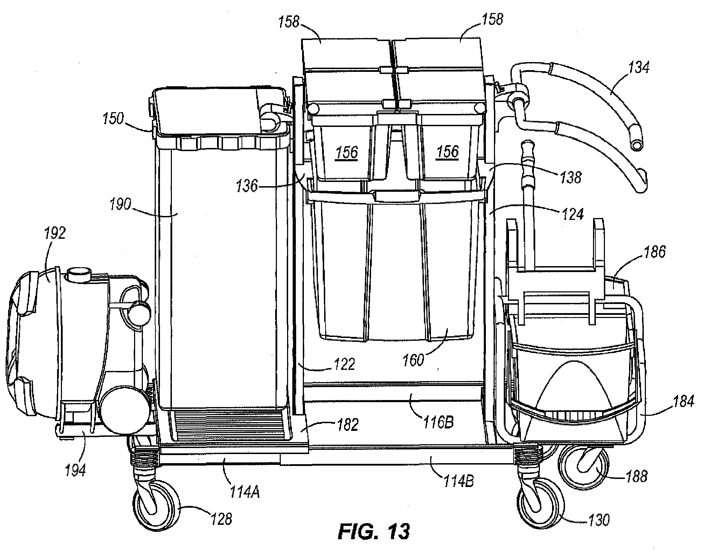

Fig. 13 shows the cleaning cart 110 in yet another configuration, wherein the cart 110 includes a mop bucket support 184 coupled to the second upright 124. A mop bucket 186 is shown positioned on the mop bucket support 184, which can be releasably coupled to the first or second upright 124 by one or more brackets of the type described above in connection with the front bag frame 50. The mop bucket support 184 can be provided with one or more wheels 188 to support the mop bucket 186 and the weight of fluid in the mop bucket 186. The wheels 188 can take any of the forms described above in connection with the front and rear wheels 28, 30, 32, 34 of the illustrated embodiment of Figs. 1-7. The front bag frame 150 illustrated in Fig. 13 is shown supporting a trash receptacle 190 above the front support tray 182. In other embodiments, the ribbed front support tray 182 can support a trash receptacle or other accessory. Another accessory shown in the embodiment of Fig. 13 is a vacuum cleaner support 194 for supporting a vacuum cleaner 192. The vacuum cleaner support 194 can be coupled to the frame 112, such as by being coupled to either of the first and second uprights 122, 124 via one or more suitable brackets (e.g., of the type described above in connection with the front bag frame 50).

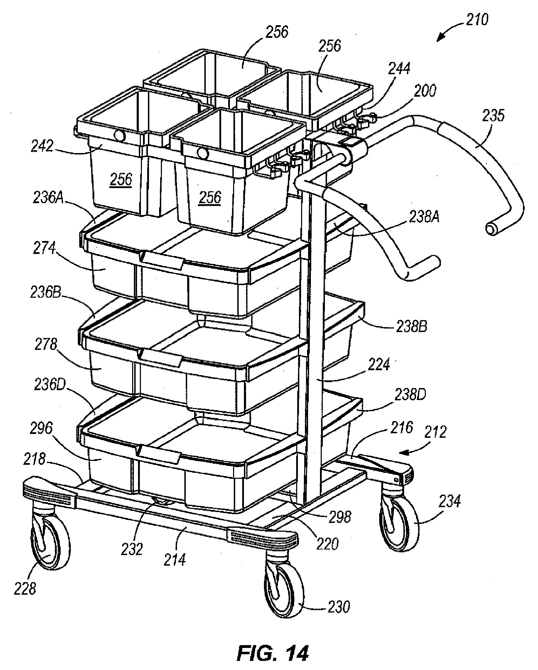

Figs. 14-20 illustrate various configurations of another embodiment of a cart 210 according to the present invention. This embodiment employs much of the same structure and has many of the same properties as the embodiments of the carts described above in connection with Figs. 1-13 and 21-35. Accordingly, the following description focuses primarily upon structure and features that are different than the embodiments described above in connection with Figs. 1-13 and 21-35. Reference should be made to the description above in connection with Figs. 1-13 and 21-35 for additional information regarding the structure and features, and possible alternatives to the structure and features of the cart 210 illustrated in Figs. 14-20 and described below. Features and elements in the embodiment of Figs. 14-20 corresponding to features and elements in the embodiments described above in connection with of Figs. 1-13 are numbered in the 200 series of reference numbers.

Figs. 14-16 illustrate a cart 210 having a frame 212 that includes horizontal bars 214, 216, crossbars 218, 220 and uprights 222, 224 supported on wheels 228, 230, 232, 234. The illustrated cart 210 further includes a top frame cross member 240 (not visible in Figs. 14-16, but positioned between uprights 222, 224), and first and second top receptacle frames 242, 244 supporting top receptacles 256. The illustrated cart 210 also includes a first intermediate receptacle 274 supported on brackets 236A and 238A and positioned below the top receptacles 256, a second intermediate receptacle 278 positioned below the first intermediate receptacle 274 and supported on brackets 236B and 238B, and a lower receptacle 296 supported on brackets 236D and 238D and positioned below the first and second intermediate receptacles 274, 278. The illustrated receptacles 274, 278 and 296 do no include covers, but can include covers in other embodiments.

As shown in Fig. 14, a lower support bar 298 can extend between the first and second uprights 222, 224 to provide additional structural stability to the cart 210, and in some embodiments, to support the lower receptacle 296. As illustrated in Figs. 14-20, some embodiments of the present invention can have one or more brackets 200 shaped to releasably hold the handle of a mop, broom, or other cleaning tool. The brackets 200 can be coupled to any of the receptacle or bag frames 242, 244, or can be attached directly to either upright 222, 224 in a manner similar to the bracket described above in connection with the front bag frame 50 illustrated in Figs. 1 and 2.

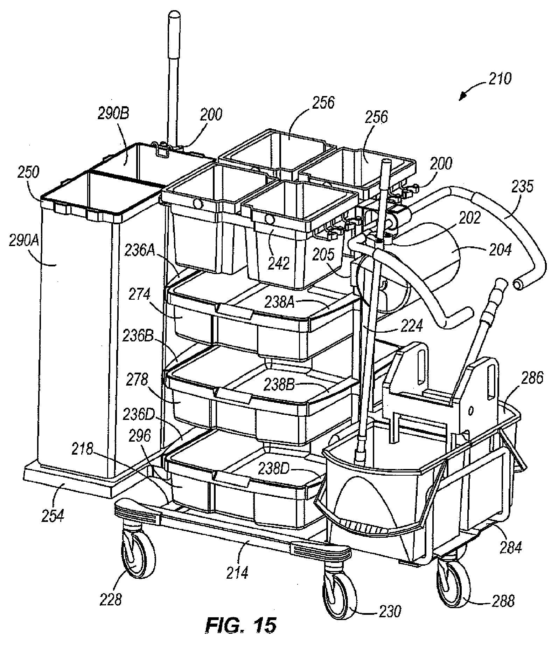

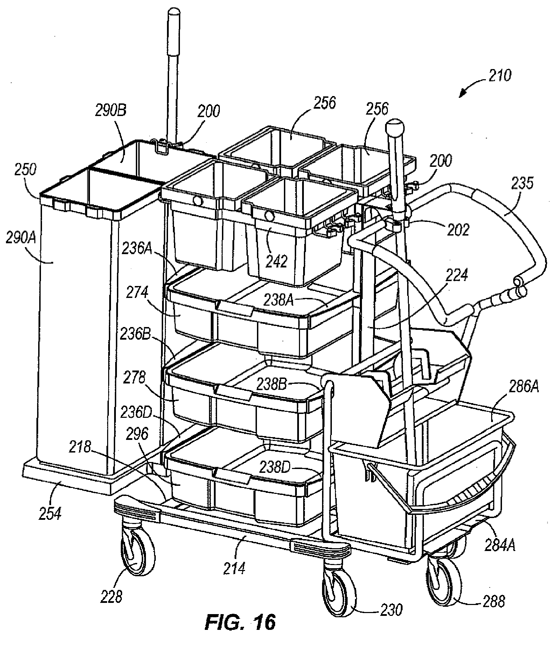

In the cart configuration illustrated in Figs. 15 and 16, a front bag frame 250 is included, and supports first and second trash receptacles 290A, 290B from the first upright 222 in a manner as described above in connection with the front bag frame 50 in the illustrated embodiment of Figs. 1 and 2. As also shown in Figs. 15 an 16, tool handle brackets 200 can also be mounted upon the front bag frame 250, if desired. Another embodiment of a tool handle bracket 202 is shown in Figs. 15 and 16, and is adapted to be attached to the handle 235 of the cart 210.

Another accessory that can be supported by the cleaning cart 210 is a roll stock holder 204. The roll stock holder 204 can be used to hold roll stock of any type, including without limitation dust mop sheets or sleeves, bags, paper towels, wipes, and any other product found in roll form. For example, and as shown in Fig. 15, the illustrated roll stock holder 204 supports a roll of dust mop sheets, and can be mounted by a bracket 205 to either uprights 222, 224 of the cleaning cart 210. The bracket 205 can take any of the forms described above in connection with the bracket 36 used to mount the front bag frame 50 in the illustrated embodiment of Figs. 1 and 2. It should be noted that the roll stock holder 204 can be included in any of the cleaning cart embodiments disclosed herein as one of many optional cart features or accessories. Also with reference to the cart configuration illustrated in Fig. 15, a mop bucket support 284 is shown for supporting a mop bucket 286 similar to that shown in Fig. 13. As with the mop bucket support 184 shown in Fig. 13, the mop bucket support 284 can have a wheel 288 to further support the weight of the mop bucket 286. Fig. 16 also illustrates a second variety of mop bucket 286A supported on a second type of mop bucket support 284A having a wheel 288.

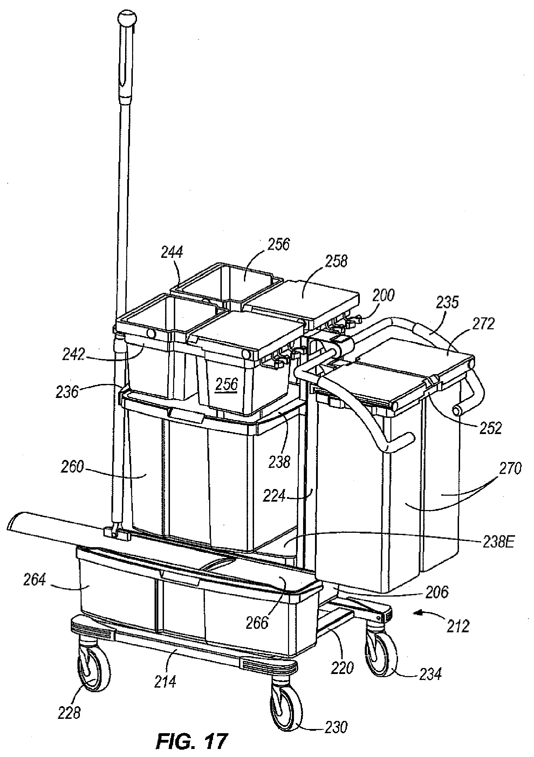

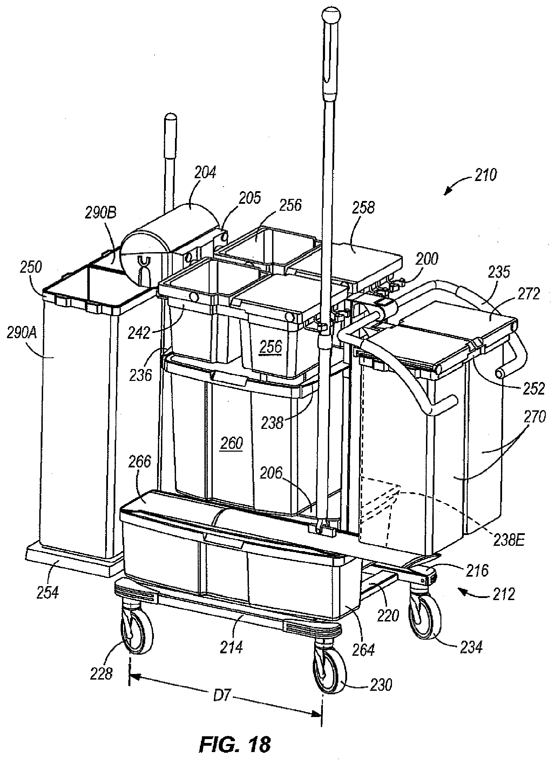

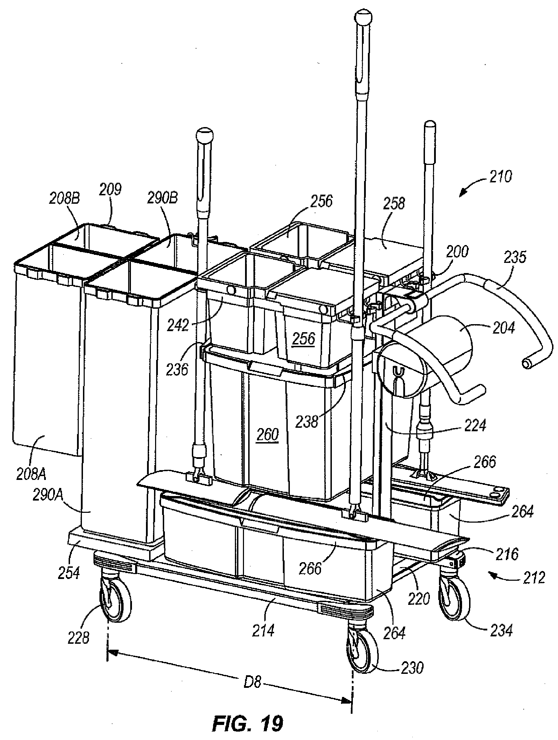

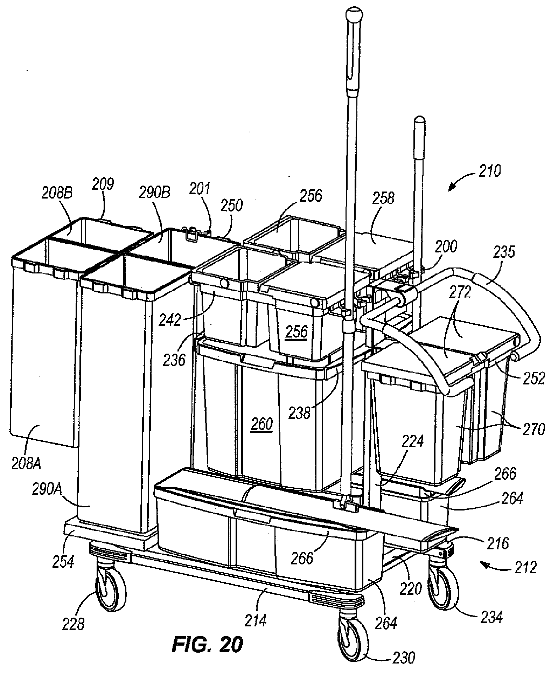

The cleaning cart configurations illustrated in Figs. 17-20 each have, among other things, top receptacles 256 and covers 258 supported on first and second top receptacle frames 242, 244, and a deep intermediate receptacle 260 supported on first and second uprights 222 and 224 by brackets 236, 238. In each of the cleaning cart configurations shown in Figs. 17-20, lower receptacles 264 and covers 266 are also supported on the frame 212. In the configurations of Figs. 19 and 20, substantially identical left and right lower receptacles 264 and covers 266 are supported on the frame 212, whereas in the configurations of Figs. 17 and 18, one of the lower receptacles 206 is supported upon brackets 236E and 238E, while the other lower receptacle 264 is supported in any of the manners described above with regard to manners of supporting bottom receptacles. Accordingly, in the illustrated configurations of Figs. 17 and 18, brackets 236E and 238E extend only in one direction from the uprights 222, 224. In other embodiments, the lower receptacle 206 is supported upon the frame 212 in any of the other manners described herein.

The cart configurations of Figs. 17, 18, and 20 each provide examples of rear receptacles 270 supported on a rear bag frame 252 connected to the second upright 224 in any of the manners described above in connection with the front bag frame 50 mounting arrangement on the first upright in Figs. 1 and 2. In the illustrated embodiments of Figs. 17, 18, and 20, rear receptacle covers 272 are included, but can be omitted if desired. A first variety of rear receptacles 270 is shown in Figs. 17 and 18, and a second variety of rear receptacles 270 is shown in Fig. 20. Either of these two varieties of rear receptacles 270 can be utilized in any of the cleaning cart embodiments described and/or illustrated herein.

In the cart configuration of Fig. 18, the front and rear wheels 228, 232 and 230, 234 of the cart 210 are positioned apart by a distance D7, trash receptacles 290A, 290B are supported by a front bag frame 250 and a front support tray 254, a roll stock holder 204 is coupled to the first upright 222, and a mop is stored in a different position on the lower receptacle 64 than is shown in Fig. 17. In the cart configuration of Fig. 19, the front and rear wheels 228, 232 and 230, 234 of the cart 210 are positioned apart by a distance D8 greater than distance D7, the frame 212 is extended in any of the manners described above, and the front support tray 254 is supported from beneath by the frame 212.

Figs. 19 and 20 further illustrate, among other things, additional front receptacles 208A and 208B supported on an additional front bag frame 209 mounted to the first front bag frame 250 described above. The additional front bag frame 209 is coupled to the front bag frame 250 and supported therefrom, and can be coupled to the front bag frame 250 in any suitable manner, such as by fasteners, brackets, and any other releasable or non-releasable connector.

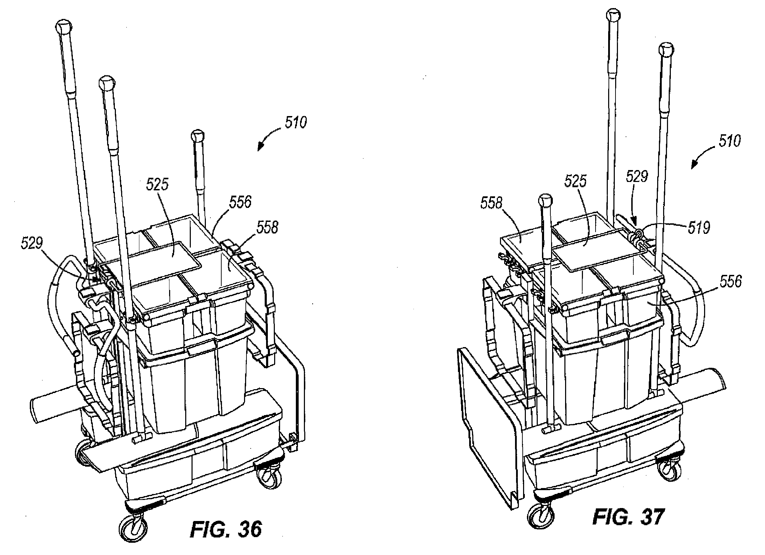

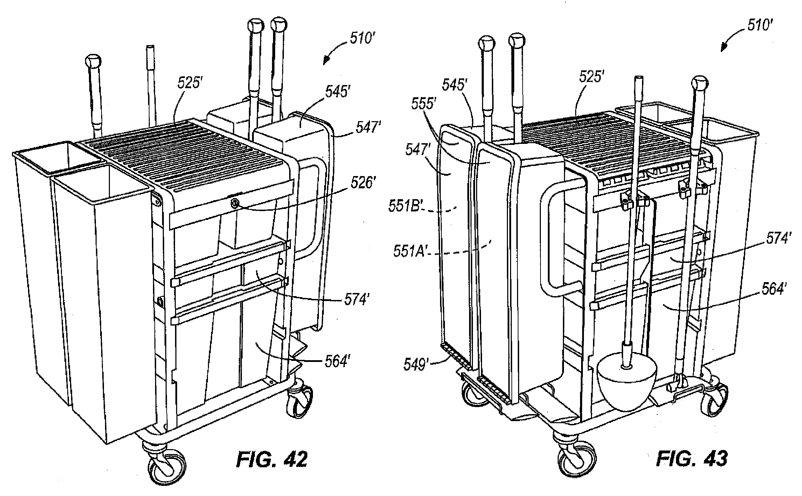

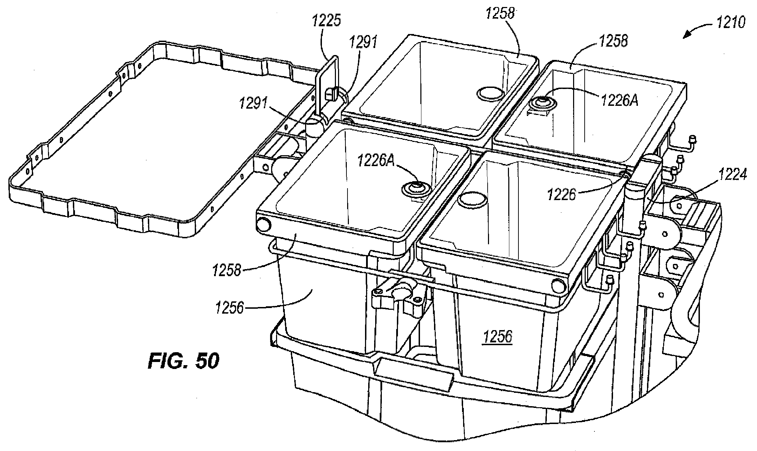

In some embodiments of the present invention, it is desirable to prevent or inhibit the ability to access the interior of receptacles and/or to prevent or inhibit removal of receptacles from the cart. In this manner, the opportunity for theft from the cleaning cart is reduced. Some examples of barrier devices that can be used to prevent or inhibit access to and/or inside the receptacles are illustrated in Figs. 36-53.

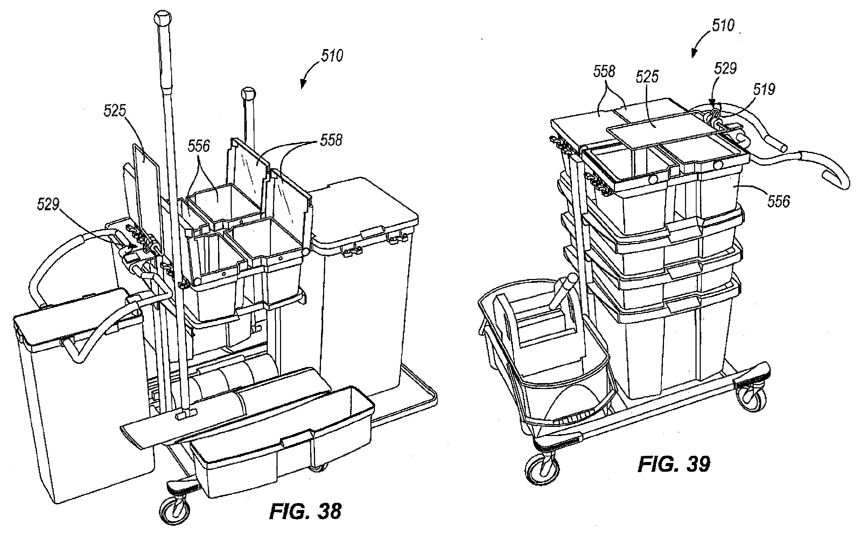

With reference first to Figs. 36-39, the illustrated cleaning cart 510 is provided with a first rotating barrier 525 adjacent the top receptacles 556. The first rotating barrier 525 prevents or inhibits removal of the top receptacles 556, and prevents or inhibits access to the interiors of the top receptacles 556 via the top receptacle covers 558. The first rotating barrier 525 can be secured in a closed position (see Figs. 36, 37 and 39), and in some embodiments, also in an open position (see Fig. 38) a locking hinge 529 that can be released by pulling on a tab 519 that engages the locking hinge 529 to prevent relative rotation between portions of the locking hinge 529. In such embodiments, the locking hinge 529 does not require a user to have a key to move the first rotating barrier to an open position, but does provide a level of resistance to unauthorized access to the top receptacles 556 (particularly if an unauthorized party is not aware of the manner in which the locking hinge 529 can be released). In other embodiments, a mechanical lock (e.g., operable by a key or code dials) can be used to secure the locking hinge 529 and/or to secure the first rotating barrier in a closed position to provide additional security.

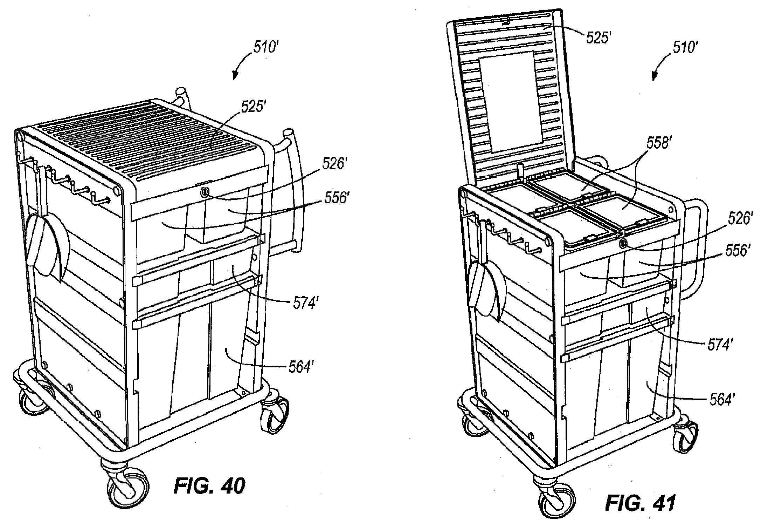

Another type of rotating barrier 525' is illustrated in Figs. 40-43, and is coupled to the cart 510' adjacent the top receptacles 556' to inhibit removal of the top receptacles 556' and to inhibit access to the interiors of the top receptacles 556' via the top receptacle covers 558'. Although not required, a key lock 526 is included in the illustrated embodiment to retain the rotating barrier 525' in a closed position with respect to the cart 510'. Other locking arrangements can be used in lieu of a key lock 526.

As best shown in Fig. 41, the rotating barrier 525' can be mechanically coupled to a locking plate extending downward in the cart 510' adjacent the intermediate and bottom receptacles 574', 564'. The locking plate (not shown) can be shaped to engage the intermediate and bottom receptacles 574', 564' when the rotating barrier 525' is moved to its closed position, and to release the intermediate and bottom receptacles 574', 564' when the rotating barrier is moved to its open position.

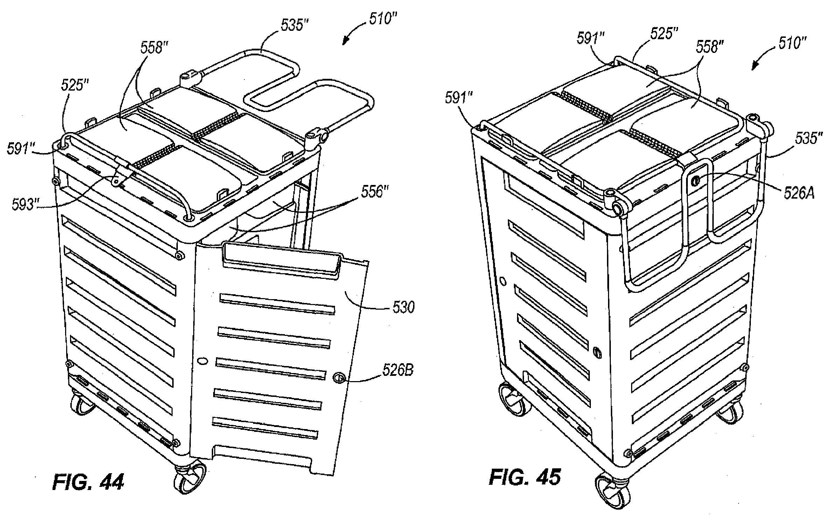

A third type of rotating barrier 525" is illustrated in Figs. 44 and 45, and is coupled to the cart 510" adjacent the top receptacle 556" to inhibit removal of the top receptacles 556" and to inhibit access to the interiors of the top receptacles 556" via the top receptacle covers 558". The illustrated embodiment also includes a handle 535" that can be rotated between stowed and deployed positions as shown in Figs. 44 and 45, and can be secured in a deployed position in any of the manners described herein. In the stowed position of the rotating barrier 525" (see Fig. 44), legs of the rotating barrier 525" are slidably received within apertures 591" in the top of the cleaning cart 510". In the deployed and locked position of the rotating barrier 525" (see Fig. 45), the legs of the rotating barrier 525" are drawn through the apertures 591" in the top of the cleaning cart 510", and the rotating barrier 525" is rotated to a position where the rotating barrier 525" extends across the receptacles 556" and receptacle covers 558". A tab 593 or other protrusion on the rotating barrier 525" can engage with a lock on the cart 510", such as a key lock 526A as shown in Figs. 44 and 45, thereby securing the rotating barrier 525" in a locked position.

The retractable rotating barrier 525" illustrated in Figs. 44 and 45 can be utilized in any of the cleaning cart embodiments described and/or illustrated in connection with Figs. 1-35. In such cases, the legs of the rotating barrier 525" can be retracted into the first and second uprights of the cleaning cart. Also, in any of the cleaning cart embodiments described and/or illustrated herein, any number of rotating barriers 525" can be used, such as to secure all of the top receptacles in embodiments in which a single rotating barrier is not positioned or shaped to do so.

The illustrated embodiment of Figs. 44 and 45 also includes a door 530 and a second key lock 526B to lock the door 530 to the cart 510" in order to inhibit access to and removal of the various receptacles carried by the cart 510".

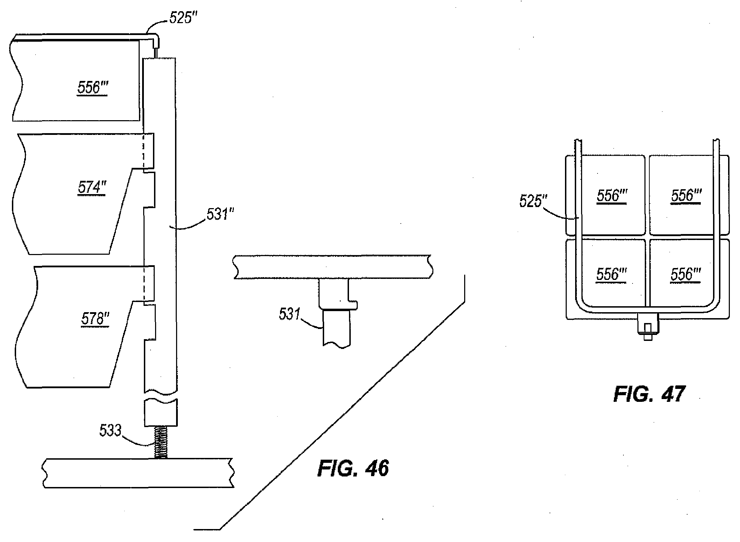

As described above in connection with Figs. 40-43, it is often desirable to secure one or more intermediate or bottom receptacles in a cleaning cart while securing top receptacles. Figs. 46 and 47 illustrate a schematic of a locking assembly performing this function. Upon rotating the rotating barrier 525" of Figs. 44 and 45 to a locked position, the tab 593" described above can be received within an aperture (not shown) in the top of the cleaning cart 510". The tab 519 pushes in a downward direction upon a vertical locking bar 531", moving the locking bar 531" against the force of a spring 533, and thereby shifting receptacle apertures in the locking bar 531" out of alignment with the receptacles 574", 578". In this manner, the receptacles 574", 578" are prevented from being withdrawn from the cleaning cart 510". When the rotating barrier 525" is moved back to the unlocked position, the spring 533 biases the vertical bar 531" upward to align the sides of the receptacles 574", 578" with the apertures in the vertical bar 531" and to permit the receptacles 574", 578" to slide in brackets 536", 538" (not shown in Figs. 46 and 47).

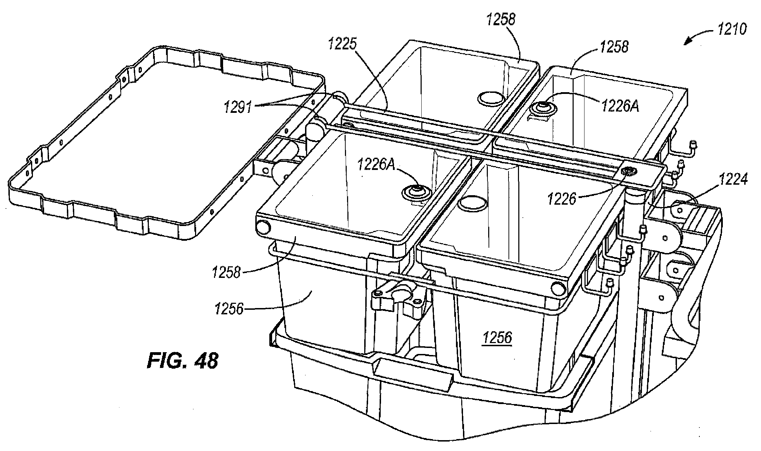

Figs. 48-50 illustrate another embodiment for locking receptacles within a mobile cleaning cart 1210. The illustrated embodiment includes a rotating barrier 1225 that can secure a plurality of top receptacles 1256 against removal or access by an unauthorized user. The illustrated rotating barrier 1225 includes a key lock 1226 that can secure the rotating barrier 1225 in a locked position. In some embodiments, one or more of the top receptacles 1256 can each include a receptacle cover 1258. However, the rotating barrier 1225 can secure the top receptacles 1256 to the cart 1210 with or without receptacle covers 1258. In the illustrated embodiment, the rotating barrier 1225 is secured to an upright 1224 to retain the rotating barrier 1225 in a locked position, as shown in Fig. 48. In some embodiments, and as will be described in greater detail below, the upright 1224 includes one or more protrusions or recesses that can engage one or more mating protrusions or recesses to lock drawers or receptacles below the top receptacles 1256.

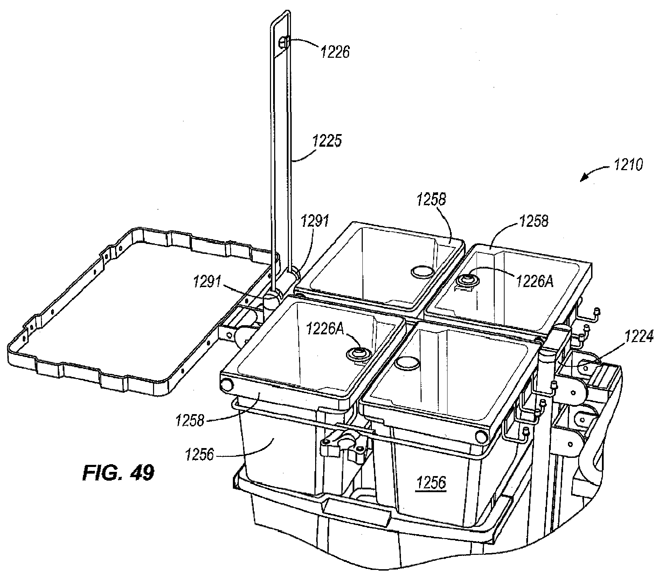

When unlocked, the rotating barrier 1225 can be rotated upward and away from the upright 1224 toward a substantially vertical position, as shown in Fig. 49. The legs of the rotating barrier 1225 are slidably received in apertures 1291 on the top of the cleaning cart 1210. In other embodiments, the rotating barrier 1225 can have other shapes and sizes suitable for performing these functions, such as an elongated bar (as opposed to a rod-like member shown in Figs. 48-50). In such embodiments, the number, shape, and position of apertures 1291 receiving the rotating barrier 1225 as just described can be adapted based upon the shape and size of the rotating barrier 1225. The rotating barrier 1225 can be stowed in the cart 1210 when not in use.

One or more of the top receptacles 1256 can include receptacle covers 1258 to enclose the receptacle interior. The covers 1258 can include a key lock 1226A or other suitable lock (e.g., a combination lock) to secure the covers 1258 to the respective top receptacle 1256. The key locks 1226A can be operated by the same or different key than the key lock 1226. In some embodiments, one of the key locks 1226A can lock two adjacent receptacle covers 1258 to the respective receptacles 1256, such as by insertion of the lock tab into aligned apertures in adjacent receptacles 1256. The key lock 1226 can be used in combination with the key locks 1226A, or either can be used independently.

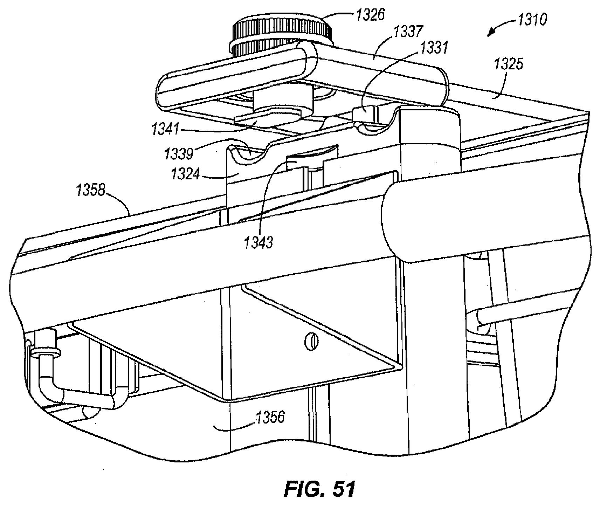

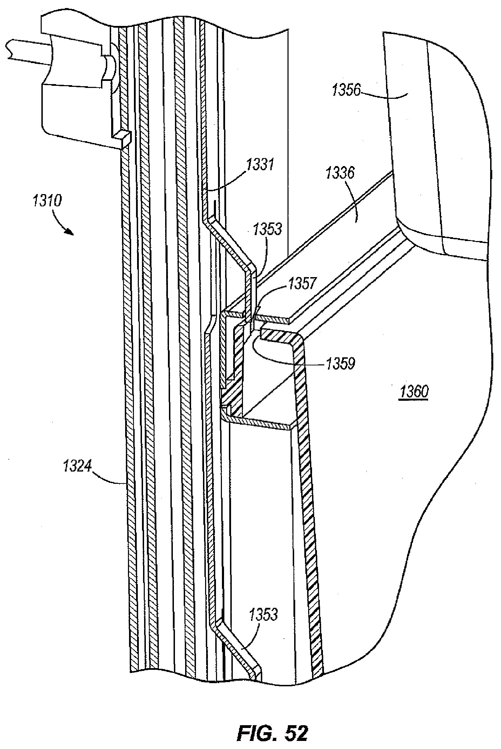

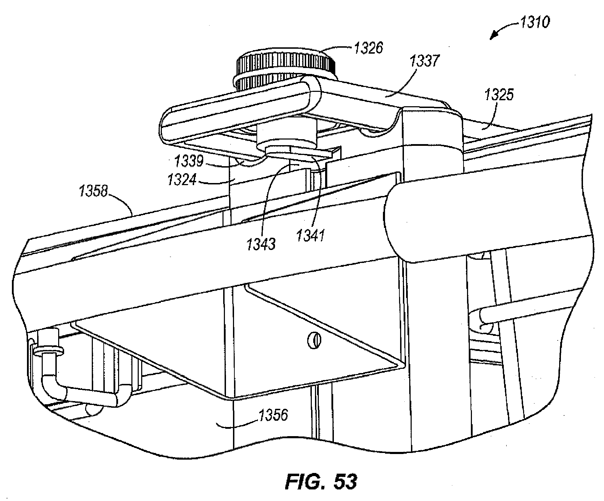

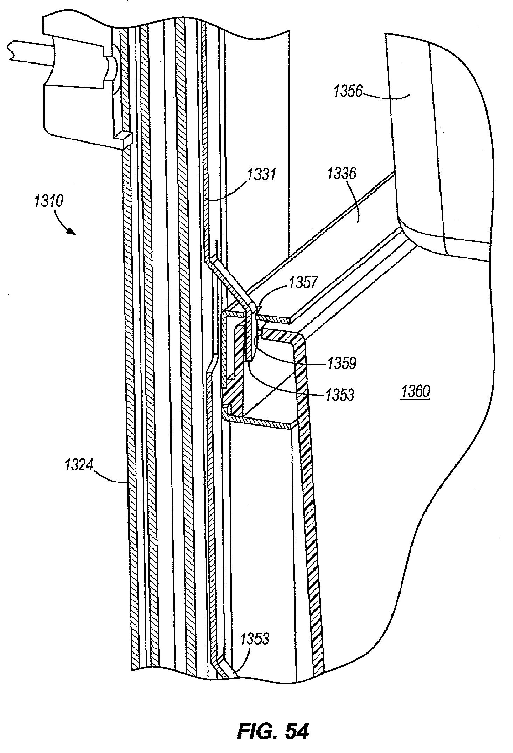

Figs. 51-54 illustrate yet another embodiment of a mobile cleaning cart rotating barrier 1325 that retains one or more receptacles 1356 and respective covers 1358 on a cart 1310. The rotating barrier 1325 can be stowed in a manner similar to the rotating barrier 1225 illustrated in Figs. 48-50. Figs. 51-54 illustrate a lock 1326 in an unlocked configuration, and a vertical locking bar 1331 also in an unlocked position. The illustrated lock 1326 is a combination lock (which can be used for any of the locks described and/or illustrated herein), but in other embodiments can instead be a key lock or other suitable lock. The rotating barrier 1325 can include an end 1337 that abuts a seat 1339 or otherwise comes to rest in a locked position, as shown in Figs. 53 and 54. The vertical locking bar 1331 can be biased upward into the unlocked position with a biasing member (not shown), such as in a manner similar to that described above in connection in Figs. 46 and 47. The rotating barrier end 1337 illustrated in Figs. 51 and 52 rests against the vertical bar 1331, but is biased upward and spaced from the seat 1339. In some embodiments, the vertical bar 1331 can be omitted. In such embodiments, the end 1337 can abut the seat 1339 in an unlocked configuration, such that the biasing member is also omitted.

The lock 1326 includes a rotating protrusion 1341 (see Figs. 51 and 53) that is rotatable into and out of engagement with a recess 1343 of the upright 1324. In Fig. 51, the rotating protrusion 1341 is spaced from the recess 1343, such that the rotating barrier end 1337 is free to move away from the seat 1339. In Fig. 53, the protrusion 1341 extends into the recess 1343 to inhibit the rotating barrier end 1337 from moving away from the seat 1339. Other locking configuration can be utilized, such as any of a variety of mating surfaces that selectively engage to lock a barrier with respect to a frame or other adjacent structure.

The cart 1310 can include at least one receptacle 1360 slidably supported on a bracket 1336 such as any of those described and/or illustrated above in connection with other embodiments of the present invention. The bracket 1336 can include an aperture 1357 extending therethrough, and the receptacle 1360 can include an aperture 1359 substantially aligned with the aperture 1357 when the receptacle 1360 is stowed on the cart 1310. In the illustrated embodiment, the apertures 1357 and 1359 are substantially elongated slots. However, in other embodiments, the apertures 1357 and 1359 can have a circular, ovular, or other rotund shape, can be triangular, square, or have another polygonal shape, can have an irregular shape, or can have any other suitable shape.

The vertical locking bar 1331 can include at least one protrusion 1353 extending therefrom, as shown in Figs. 52-54. The at least one protrusion 1353 can extend the apertures 1357, 1359 to lock the receptacle 1360 to the bracket 1336 and/or cart 1310. The protrusion 1353 is shown spaced from the apertures 1357, 1359 in Fig. 52, such that the receptacle 1360 can slide along the bracket 1336, and is shown extending through both apertures 1357, 1359 in Fig. 54, such that the receptacle 1360 is inhibited or prevented from sliding along the bracket 1336. Similar protrusions 1353 and apertures 1357, 1359 can be provided to secure any number of receptacles 1360 to the cart 1310. Therefore, when the vertical locking bar 1331 is moved by the rotating barrier end 1337, the protrusion 1353 is inserted into the apertures 1357, 1359 to lock the receptacle 1360 to the cart 1310. Also, the rotating barrier 1325 can be locked by moving the rotating protrusion 1341 into the recess 1343 to lock the top receptacles 1356 and respective covers 1358 to the cart 1310. Therefore, a single lock 1326 can be used to simultaneously lock the top receptacles 1356 and respective covers 1358 and one or more receptacles 1360 to the cart 1310.

It should be noted that any of the locking devices and structures described above can be used in conjunction with any of the cleaning cart embodiments described and/or illustrated herein.

With reference again to the cleaning cart 510' illustrated in Figs. 40-43, some embodiments of the present invention utilize receptacles 545' adapted to hold items in a vertical orientation within the receptacles 545'. Such receptacles 545' can be carried by cleaning carts according to any of the above-described embodiments of the present invention. To this end, a rear of each receptacle 545' can be provided with one or more brackets (not shown) adapted to be attached to the cleaning cart 510' to retain the receptacles 545' in a vertical orientation. In such embodiments, the bracket can take any of the forms described herein, and can be attached directly to the first or second uprights of the cleaning cart, to a bag or receptacle frame of the cleaning cart, and the like.

The vertical receptacles 545' can include vertically oriented covers 547' that can be hinged to the vertical receptacles 545'. In the illustrated embodiment of Figs. 40-43, the hinge 549' is at a lower portion of the vertical receptacles 545' and respective covers 547' to permit rotation of the covers 537' with respect to the vertical receptacles 545' in a downward direction. In other embodiments, the hinge 549' is positioned at an upper portion of the vertical receptacles 545' for an opposite direction of rotation. In still other embodiments, the hinge 549' is positioned at a right or left edge of the vertical receptacles 545'.

Any of a variety of items can be contained in the vertical receptacles 545'. For example, in the illustrated embodiment of Figs. 40-43, the vertical receptacles 545' contain two different lengths of mop heads 551A', 551B'. The vertical receptacles 545' can each have one or more hangers 555' for suspending mop heads or other cleaning tools or supplies within the vertical receptacles 545'.

In some embodiments, the vertical receptacles 545' and covers 547' can form a water-tight seal to prevent pre-moistened mop heads or other pre-moistened cleaning tool heads from drying out. Also, in some embodiments, the vertical receptacles 545' and covers 547' can form an air-tight seal for this same purpose.

The embodiments described above and illustrated in the figures are presented by way of example only and are not intended as a limitation upon the concepts and principles of the present invention. As such, it will be appreciated by one having ordinary skill in the art that various changes in the elements and their configuration and arrangement are possible without departing from the spirit and scope of the present invention. Various features and advantages of the invention are set forth in the following paragraphs.

The paragraphs that follow define further embodiments forming part of the present disclosure.
Paragraph 1. A cleaning cart for supporting cleaning supplies, the cleaning cart comprising:
   a bar defining a length that is adjustable to change at least one of a length and a width of the cleaning cart;
   first and second wheels coupled to the bar and separated a distance that is adjustable by varying the length of the bar;
   an upright coupled to the bar and extending upwardly therefrom; and
   a receptacle coupled to at least one of the bar and the upright and adapted to hold cleaning supplies therein.
Paragraph 2. The cleaning cart of paragraph 1, wherein the upright is adjustable in length.
Paragraph 3. The cleaning cart of paragraph 1, wherein the receptacle is coupled for movement with respect to the cart between a stowed position and a deployed position.
Paragraph 4. The cleaning cart of paragraph 1, further comprising a user-manipulable control coupled to the receptacle, the user-manipulable control operable to move one of the receptacle and a receptacle frame supporting the receptacle between a stowed position and a deployed position with respect to the upright.
Paragraph 5. The cleaning cart of paragraph 4, wherein the user-manipulable control is operable to move the other of the receptacle and the receptacle frame between a stowed position and a deployed position with respect to the upright.
Paragraph 6. The cleaning cart of paragraph 1, wherein the upright is a first upright, and wherein the cleaning cart further comprises a second upright spaced a distance from the first upright and coupled to the bar, the first and second uprights supporting the receptacle therebetween.
Paragraph 7. The cleaning cart of paragraph 1, further comprising a barrier positioned to inhibit removal of the receptacle when the barrier is in a first position and to permit removal of the receptacle when the barrier is in a second position.
Paragraph 8. The cleaning cart of paragraph 1, further comprising a plurality of brackets coupled to the upright and positioned to support the receptacle in suspended relationship within the cart.
Paragraph 9. The cleaning cart of paragraph 8, wherein the receptacle is horizontally slidable into and out of at least one of the brackets.
Paragraph 10. A cleaning cart for supporting cleaning supplies, the cleaning cart comprising:
   a bar;
   first and second wheels coupled to the bar;
   an upright coupled to the bar, extending upwardly therefrom, at least partially defining a height of the cleaning cart, and having a length that is adjustable to change the height of the cleaning cart; and
   a receptacle coupled to at least one of the bar and the upright and adapted to hold cleaning supplies therein.
Paragraph 11. The cleaning cart of paragraph 10, wherein the bar has an adjustable length to change at least one of a length and a width of the cleaning cart.
Paragraph 12. The cleaning cart of paragraph 10, wherein the receptacle is coupled for movement with respect to the cart between a stowed position and a deployed position.
Paragraph 13. The cleaning cart of paragraph 10, further comprising a user-manipulable control coupled to the receptacle, the user-manipulable control operable to move one of the receptacle and a receptacle frame supporting the receptacle between a stowed position and a deployed position with respect to the bar.
Paragraph 14. The cleaning cart of paragraph 13, wherein the user-manipulable control is operable to move the other of the receptacle and the receptacle frame between a stowed position and a deployed position with respect to the bar.
Paragraph 15. The cleaning cart of paragraph 10, wherein the upright is a first upright, and wherein the cleaning cart further comprises a second upright spaced a distance from the first upright and coupled to the bar, the first and second uprights supporting the receptacle therebetween.
Paragraph 16. The cleaning cart of paragraph 10, further comprising a barrier positioned to inhibit removal of the receptacle when the barrier is in a first position and to permit removal of the receptacle when the barrier is in a second position.
Paragraph 17. The cleaning cart of paragraph 10, further comprising a plurality of brackets coupled to the upright and positioned to support the receptacle in suspended relationship within the cart.
Paragraph 18. The cleaning cart of paragraph 17, wherein the receptacle is horizontally slidable into and out of at least one of the brackets.
Paragraph 19. A cleaning cart for supporting cleaning supplies, the cleaning cart comprising:
   a cart frame;
   at least one receptacle movable with respect to the cart frame;
   a receptacle frame moveably coupled to the cart frame to support the at least one receptacle on the cart frame, wherein the receptacle is removable and replaceable within the receptacle frame; and
   a user-manipulable control coupled to the receptacle frame and operable to move the receptacle and receptacle frame between a stowed position and a deployed position with respect to the main frame.
Paragraph 20. The cleaning cart of paragraph 19, wherein the receptacle is moveable with respect to the cart frame in a combination of translation and rotation between the stowed and deployed positions.
Paragraph 21. The cleaning cart of paragraph 19, wherein the cart frame includes an upright and a bar, and at least one of the upright and the bar is adjustable to alter at least one of a height, a length, and a width of the cart frame.
Paragraph 22. The cleaning cart of paragraph 21, wherein the other of the upright and the bar is adjustable to alter another of the height, length, and width of the cart frame.
Paragraph 23. The cleaning cart of paragraph 19, wherein the cart frame comprises first and second spaced uprights positioned to support the at least one receptacle therebetween in suspended relationship within the cart frame.
Paragraph 24. The cleaning cart of paragraph 19, further comprising a barrier positioned to inhibit removal of at least one of the receptacles when the barrier is in a first position and to permit removal thereof when the barrier is in a second position.
Paragraph 25. The cleaning cart of paragraph 19, further comprising a plurality of brackets coupled to an upright of the cart frame and positioned to support at least one of the receptacles in suspended relationship within the cart.
Paragraph 26. The cleaning cart of paragraph 19, wherein the user-manipulable control is operable to simultaneously move two receptacles between respective stowed and deployed positions.
Paragraph 27. A cleaning cart for supporting cleaning supplies, the cleaning cart comprising:
   a cart frame;
   at least one receptacle movable with respect to the cart frame; and
   at least one receptacle frame moveably coupled to the cart frame to support the at least one receptacle on the cart frame; the receptacle frame movable in a combination of translation and rotation between a stowed position and a deployed position with respect to the main frame.
Paragraph 28. The cleaning cart of paragraph 27, wherein a four-bar linkage couples the receptacle frame to the main frame to permit both rotation and translation of the receptacle.
Paragraph 29. The cleaning cart of paragraph 27, wherein the cart frame includes an upright and a bar, and at least one of the upright and the bar is adjustable to alter at least one of a height, a length, and a width of the cart frame.
Paragraph 30. The cleaning cart of paragraph 29, wherein the other of the upright and the bar is adjustable to alter another of the height, length, and width of the cart frame.
Paragraph 31. The cleaning cart of paragraph 27, wherein the cart frame comprises first and second spaced uprights positioned to support the at least one receptacle therebetween in suspended relationship within the cart frame.
Paragraph 32. The cleaning cart of paragraph 27, further comprising a barrier positioned to inhibit removal of at least one of the receptacles when the barrier is in a first position and to permit removal thereof when the barrier is in a second position.
Paragraph 33. The cleaning cart of paragraph 27, further comprising a plurality of brackets coupled to an upright of the cart frame and positioned to support at least one of the receptacles in suspended relationship within the cart.
Paragraph 34. The cleaning cart of paragraph 33, wherein the user-manipulable control is operable to simultaneously move two receptacles between respective stowed and deployed positions.
Paragraph 35. A cleaning cart for supporting cleaning supplies, the cleaning cart comprising:
   a frame;
   at least one top receptacle supported on the frame and accessible from a top of the cleaning cart;
   at least one underlying receptacle supported on the frame and accessible from a side of the cleaning cart; and
   a barrier movable to and from a position in which removal of the at least one top receptacle and the at least one underlying receptacle is blocked.
Paragraph 36. The cleaning cart of paragraph 35, further comprising a four-bar linkage movable to rotate and translate at least one of the receptacles.
Paragraph 37. The cleaning cart of paragraph 35, wherein the frame includes an upright and a bar, and at least one of the upright and the bar is adjustable to alter at least one of a height, a length, and a width of the frame.
Paragraph 38. The cleaning cart of paragraph 37, wherein the other of the upright and the bar is adjustable to alter another of the height, length, and width of the cart frame.
Paragraph 39. The cleaning cart of paragraph 35, wherein the frame comprises first and second spaced uprights positioned to support the at least one top receptacle therebetween in suspended relationship within the frame.
Paragraph 40. The cleaning cart of paragraph 35, wherein the barrier is rotatable with respect to the frame.
Paragraph 41. The cleaning cart of paragraph 35, wherein the barrier is retractable within a member of the frame.
Paragraph 42. The cleaning cart of paragraph 35, wherein access to an interior of at least one of the top receptacles is blocked by the barrier in at least one position of the barrier.

## Claims

1. A cleaning cart for supporting cleaning supplies, the cleaning cart comprising:
a cart frame;
a receptacle movable relative to the cart frame;
a receptacle frame movably coupled to the cart frame to support the receptacle on the cart frame, wherein the receptacle is removable and replaceable within the receptacle frame; and
a user-manipulable control including an actuator coupled to the receptacle or the receptacle frame, the actuator engageable by a user to move the receptacle and the receptacle frame between a stowed position and a deployed position relative to the cart frame.

2. The cleaning cart of claim 1, wherein the receptacle is movable relative to the cart frame in a combination of translation and rotation between the stowed and deployed positions.

3. The cleaning cart of claim 2, further comprising a four-bar linkage coupling the receptacle frame to the cart frame to permit translation and rotation of the receptacle between the stowed and deployed positions.

4. The cleaning cart of claim 1, wherein the receptacle defines a first receptacle and the cleaning cart further includes a second receptacle, and wherein the user-manipulable control is configured to simultaneously move the first receptacle and the second receptacle between respective stowed and deployed positions.

5. The cleaning cart of claim 1, wherein the receptacle includes a cover, and wherein the receptacle is movable relative to the cover between the stowed and deployed positions;
and/or
wherein the actuator is movable relative to the receptacle and the receptacle frame.

6. The cleaning cart of claim 1, wherein the receptacle pivots about a horizontal axis or a vertical axis to vary the receptacle between the stowed position and the deployed position.

7. The cleaning cart of claim 6, wherein pivotal movement of the receptacle includes movement outward and downward relative to the cart frame.

8. The cleaning cart of claim 6, wherein a gear box is coupled to the actuator and configured to hold the receptacle at any position along a travel path.

9. The cleaning cart of claim 1, wherein the cart frame includes a vertically-extending upright, wherein the receptacle frame is a first receptacle frame and the cleaning cart includes a second receptacle frame, and wherein the first and second receptacle frames are coupled to and positioned on opposite sides of the upright such that the upright is disposed between the first and second receptacle frames.

10. The cleaning cart of claim 9, wherein the receptacle is supported on the upright via one of the receptacle frames and configured to hold cleaning supplies therein, and wherein each of the receptacle frames is vertically adjustable within a range of positions along the upright.

11. The cleaning cart of claim 9, wherein the upright is a first upright and the cart frame includes a second vertically-extending upright spaced apart from the first upright, and wherein the receptacle is supported by the first upright and the second upright.

12. The cleaning cart of claim 11, wherein each of the receptacle frames is positioned to support respective receptacles in suspended relationship within the cart frame.

13. A cleaning cart for supporting cleaning supplies, the cleaning cart comprising:
a cart frame including a bar defining a length or a width of the cleaning cart, the cart frame further including an upright coupled to the bar;
first and second wheels coupled to the bar;
receptacle frames coupled to and positioned on opposite sides of the upright such that the upright is disposed between the receptacle frames; and
a receptacle coupled to the upright via one of the receptacle frames and configured to hold cleaning supplies therein,
wherein each of the receptacle frames is vertically adjustable within a range of positions along the upright.

14. The cleaning cart of claim 13, wherein the upright includes apertures or protrusions disposed along the length of the upright on both sides of the upright, and wherein the respective receptacle frames are coupled to the upright via mating engagement with the respective apertures or protrusions.

15. A method of supporting cleaning supplies on a cleaning cart having a cart frame, the method comprising:
supporting a receptacle on the cart frame via a receptacle frame;
engaging a user-manipulable control coupled to the receptacle or the receptacle frame;
moving the receptacle and the receptacle frame between a stowed position and a deployed position relative to the cart frame in response to actuation of the user-manipulable control.
